(19) Europäisches Patentamt
European Patent Office
Office européen des brevets

(11) EP 3 535 371 B1

(12) **EUROPEAN PATENT SPECIFICATION**

(45) Date of publication and mention of the grant of the patent:
**09.09.2020 Bulletin 2020/37**

(21) Application number: **17805019.1**

(22) Date of filing: **01.11.2017**

(51) Int Cl.:
*C11D 3/40* (2006.01) *C11D 3/42* (2006.01)
*C11D 11/00* (2006.01) *C11D 3/37* (2006.01)

(86) International application number:
**PCT/US2017/059415**

(87) International publication number:
**WO 2018/085302 (11.05.2018 Gazette 2018/19)**

(54) **LEUCO POLYMERS AS BLUING AGENTS IN LAUNDRY CARE COMPOSITIONS**

LEUKOPOLYMERE ALS VERGRAUUNGSHEMMER IN WÄSCHEPFLEGEZUSAMMENSETZUNGEN

LEUCO POLYMÈRES COMME AGENTS D'AZURAGE DANS DES COMPOSITIONS D'ENTRETIEN DU LINGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2016 US 201662415559 P**

(43) Date of publication of application:
**11.09.2019 Bulletin 2019/37**

(73) Proprietor: **The Procter & Gamble Company**
**Cincinnati, OH 45202 (US)**

(72) Inventors:
- **MIRACLE, Gregory, Scot**
  **Cincinnati**
  **Ohio 45202 (US)**
- **QIN, Haihu**
  **Spartanburg**
  **South Carolina 29303 (US)**
- **DEY,Sanjeev, Kumar**
  **Spartanburg**
  **South Carolina 29303 (US)**

(74) Representative: **P&G Patent Belgium UK**
**N.V. Procter & Gamble Services Company S.A.**
**Temselaan 100**
**1853 Strombeek-Bever (BE)**

(56) References cited:
**WO-A1-2016/178668**
**WO-A2-2008/100445**
**US-A- 3 133 036**
**US-A- 3 341 539**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 535 371 B1

## Description

TECHNICAL FIELD

This application describes laundry care compositions that contain leuco polymers and their use in the laundering of textile articles. These types of leuco polymers are provided in a stable, substantially colorless state and then may be transformed to an intense colored state upon exposure to certain physical or chemical changes such as, for example, exposure to oxygen, ion addition, exposure to light. The laundry care compositions containing the leuco polymers are designed to enhance the apparent or visually perceived whiteness of, or to impart a desired hue to, textile articles washed or otherwise treated with the laundry care composition.

BACKGROUND

As textile substrates age, their color tends to fade or yellow due to exposure to light, air, soil, and natural degradation of the fibers that comprise the substrates. As such, to visually enhance these textile substrates and counteract the fading and yellowing the use of polymeric colorants for coloring consumer products has become well known in the prior art. For example, it is well known to use whitening agents, either optical brighteners or blueing agents, in textile applications. However, traditional whitening agents when used at levels providing consumer noticeable whiteness benefits may either adversely impact finished product aesthetics, or if highly depositing, have issues with build up over time and over hueing.

Leuco dyes are also known in the prior art to exhibit a change from a colorless or slightly colored state to a colored state upon exposure to specific chemical or physical triggers, for example as described in WO2008/100445. The change in coloration that occurs is typically visually perceptible to the human eye. All existing compounds have some absorbance in the visible light region (400-750 nm), and thus more or less have some color. In this invention, a dye is considered as a "leuco dye" if it did not render a significant color at its application concentration and conditions, but renders a significant color in its triggered form. The color change upon triggering stems from the change of the molar attenuation coefficient (also known as molar extinction coefficient, molar absorption coefficient, and/or molar absorptivity in some literatures) of the leuco dye molecule in the 400-750 nm range, preferably in the 500-650 nm range, and most preferably in the 530-620 nm range. The increase of the molar attenuation coefficient of a leuco dye before and after the triggering should be bigger than 50%, more preferably bigger than 200%, and most preferably bigger than 500%.

As such, there remains a need for an effective whitening agent that deposits to provide the desired whiteness benefit yet does not adversely impact finished product aesthetics or cause over hueing after multiple washes.

It has now surprisingly been found that the leuco polymers disclosed herein provide the desired consumer whiteness benefit, without adverse effects.

SUMMARY OF THE INVENTION

In a first embodiment, the invention provides a laundry care composition comprising: (a) at least one laundry care ingredient and (b) at least one leuco polymer comprising a leuco monomer and an alkene. The skilled artisan realizes that both the leuco monomer alkene and the co-monomer alkene will be alkylene moieties once incorporated into the leuco polymer. The leuco polymer has a molecular weight of at least 500 and is obtainable by polymerization of the leuco monomer and one or more alkene co-monomers. The leuco monomer comprising an alkene covalently bound to a leuco moiety and the leuco monomer has a molar extinction coefficient at a wavelength in the range 400 to 750nm of less than 1000 $M^{-1}cm^{-1}$. The alkene monomer(s) have a molar extinction coefficient at a wavelength in the range 400 to 750nm that is less than 100 $M^{-1}cm^{-1}$.

In a second embodiment, the invention provides a method of treating a textile material, the method comprising the steps of (a) treating the textile material with an aqueous solution of the leuco polymer, (b) optionally, rinsing the textile material, and (c) optionally, drying the textile material.

DETAILED DESCRIPTION

Definitions

As used herein, the term "alkoxy" is intended to include $C_1$-$C_8$ alkoxy and alkoxy derivatives of polyols having repeating units such as butylene oxide, glycidol oxide, ethylene oxide or propylene oxide.

As used herein, the interchangeable terms "alkyleneoxy" and "oxyalkylene," and the interchangeable terms "polyalkyleneoxy" and "polyoxyalkylene," generally refer to molecular structures containing one or more than one, respectively, of the following repeating units: $-C_2H_4O$ -, $-C_3H_6O-$, $-C_4H_8O-$, and any combinations thereof. Non-limiting structures corresponding to these groups include $CH_2CH_2O-$, $CH_2CH_2CH_2O-$, $-CH_2CH_2CH_2CH_2O-$, $-CH_2CH(CH_3)O-$, and $-CH_2CH(CH_2CH_3)O-$, for example. Furthermore, the polyoxyalkylene constituent may be selected from the group consisting of one or more monomers selected from a $C_{2-20}$ alkyleneoxy group, a glycidyl group, or mixtures thereof.

The terms "ethylene oxide," "propylene oxide" and "butylene oxide" may be shown herein by their typical designation of "EO," "PO" and "BO," respectively.

As used herein, the terms "alkyl" and "alkyl capped" are intended to mean any univalent group formed by removing a hydrogen atom from a substituted or unsubstituted hydrocarbon. Non-limiting examples include hydrocarbyl moieties which are branched or unbranched, substituted or unsubstituted including $C_1$-$C_{18}$ alkyl groups, and in one aspect, $C_1$-$C_6$ alkyl groups.

As used herein, unless otherwise specified, the term "aryl" is intended to include $C_3$-$C_{12}$ aryl groups. The term "aryl" refers to both carbocyclic and heterocyclic aryl groups.

As used herein, the term "alkaryl" refers to any alkyl-substituted aryl substituents and aryl-substituted alkyl substituents. More specifically, the term is intended to refer to $C_{7-16}$ alkyl-substituted aryl substituents and $C_{7-16}$ aryl substituted alkyl substituents which may or may not comprise additional substituents.

As used herein, the term "detergent composition" is a sub-set of laundry care composition and includes cleaning compositions including but not limited to products for laundering fabrics. Such compositions may be pre-treatment composition for use prior to a washing step or may be rinse added compositions, as well as cleaning auxiliaries, such as bleach additives and "stain-stick" or pre-treat types.

As used herein, the term "laundry care composition" includes, unless otherwise indicated, granular, powder, liquid, gel, paste, unit dose, bar form and/or flake type washing agents and/or fabric treatment compositions, including but not limited to products for laundering fabrics, fabric softening compositions, fabric enhancing compositions, fabric freshening compositions, and other products for the care and maintenance of fabrics, and combinations thereof. Such compositions may be pre-treatment compositions for use prior to a washing step or may be rinse added compositions, as well as cleaning auxiliaries, such as bleach additives and/or "stain-stick" or pre-treat compositions or substrate-laden products such as dryer added sheets.

As used herein, the term "leuco" (as used in reference to, for example, a compound, moiety, radical, dye, monomer, fragment, or polymer) refers to an entity (e.g., organic compound or portion thereof) that, upon exposure to specific chemical or physical triggers, undergoes one or more chemical and/or physical changes that results in a shift from a first color state (e.g., uncolored or substantially colorless) to a second more highly colored state. Suitable chemical or physical triggers include, but are not limited to, oxidation, pH change, temperature change, and changes in electromagnetic radiation (e.g., light) exposure. Suitable chemical or physical changes that occur in the leuco entity include, but are not limited to, oxidation and non-oxidative changes, such as intramolecular cyclization. Thus, in one aspect, a suitable leuco entity can be a reversibly reduced form of a chromophore. In one aspect, the leuco moiety preferably comprises at least a first and a second $\pi$-system capable of being converted into a third combined conjugated $\pi$-system incorporating said first and second $\pi$-systems upon exposure to one or more of the chemical and/or physical triggers described above.

As used herein, the terms "leuco composition" or "leuco colorant composition" refers to a composition comprising at least two leuco compounds having independently selected structures as described in further detail herein.

As used herein "average molecular weight" of the leuco colorant is reported as a weight average molecular weight, as determined by its molecular weight distribution: as a consequence of their manufacturing process, the leuco colorants disclosed herein may contain a distribution of repeating units in their polymeric moiety.

As used herein, the terms "maximum extinction coefficient" and "maximum molar extinction coefficient" are intended to describe the molar extinction coefficient at the wavelength of maximum absorption (also referred to herein as the maximum wavelength), in the range of 400 nanometers to 750 nanometers.

As used herein, the term "first color" is used to refer to the color of the laundry care composition before triggering, and is intended to include any color, including colorless and substantially colorless.

As used herein, the term "second color" is used to refer to the color of the laundry care composition after triggering, and is intended to include any color that is distinguishable, either through visual inspection or the use of analytical techniques such as spectrophotometric analysis, from the first color of the laundry care composition.

As used herein, the term "converting agent" refers to any oxidizing agent as known in the art other than molecular oxygen in any of its known forms (singlet and triplet states).

As used herein, the term "triggering agent" refers to a reactant suitable for converting the leuco composition from a colorless or substantially colorless state to a colored state.

As used herein, the term "whitening agent" refers to a dye or a leuco colorant that may form a dye once triggered that when on white cotton provides a hue to the cloth with a relative hue angle of 210 to 345, or even a relative hue angle of 240 to 320, or even a relative hue angle of 250 to 300 (e.g., 250 to 290).

As used herein, "cellulosic substrates" are intended to include any substrate which comprises at least a majority by weight of cellulose. Cellulose may be found in wood, cotton, linen, jute, and hemp. Cellulosic substrates may be in the form of powders, fibers, pulp and articles formed from powders, fibers and pulp. Cellulosic fibers, include, without limitation, cotton, rayon (regenerated cellulose), acetate (cellulose acetate), triacetate (cellulose triacetate), and mixtures thereof. Articles formed from cellulosic fibers include textile articles such as fabrics. Articles formed from pulp include paper.

As used herein, articles such as "a" and "an" when used in a claim, are understood to mean one or more of what is claimed or described.

As used herein, the terms "include/s" and "including" are meant to be non-limiting.

As used herein, the term "solid" includes granular, powder, bar and tablet product forms.

As used herein, the term "fluid" includes liquid, gel, paste and gas product forms.

The test methods disclosed in the Test Methods Section of the present application should be used to determine the respective values of the parameters of Applicants' inventions.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

In one aspect, the molar extinction coefficient of said second colored state at the maximum absorbance in the wavelength in the range 200 to 1,000 nm (more preferably 400 to 750 nm) is preferably at least five times, more preferably 10 times, even more preferably 25 times, most preferably at least 50 times the molar extinction coefficient of said first color state at the wavelength of the maximum absorbance of the second colored state. Preferably, the molar extinction coefficient of said second colored state at the maximum absorbance in the wavelength in the range 200 to 1,000 nm (more preferably 400 to 750 nm) is at least five times, preferably 10 times, even more preferably 25 times, most preferably at least 50 times the maximum molar extinction coefficient of said first color state in the corresponding wavelength range. An ordinarily skilled artisan will realize that these ratios may be much higher. For example, the first color state may have a maximum molar extinction coefficient in the wavelength range from 400 to 750 nm of as little as 10 $M^{-1}cm^{-1}$, and the second colored state may have a maximum molar extinction coefficient in the wavelength range from 400 to 750 nm of as much as 80,000 $M^{-1}cm^{-1}$ or more, in which case the ratio of the extinction coefficients would be 8,000:1 or more.

In one aspect, the maximum molar extinction coefficient of said first color state at a wavelength in the range 400 to 750 nm is less than 1000 $M^{-1}cm^{-1}$, and the maximum molar extinction coefficient of said second colored state at a wavelength in the range 400 to 750 nm is more than 5,000 $M^{-1}cm^{-1}$, preferably more than 10,000, 25,000, 50,000 or even 100,000 $M^{-1}cm^{-1}$. A skilled artisan will recognize and appreciate that a polymer comprising more than one leuco moiety may have a significantly higher maximum molar extinction coefficient in the first color state (e.g., due to the additive effect of a multiplicity of leuco moieties or the presence of one or more leuco moieties converted to the second colored state). Where more than one leuco moiety is attached to a molecule, the maximum molar extinction coefficient

of said second color state may be more than n x ε where n is the number of leuco moieties plus oxidized leuco moieties present on the molecule, and ε is selected from 5,000 $M^{-1}cm^{-1}$, preferably more than 10,000, 25,000, 50,000 or even 100,000 $M^{-1}cm^{-1}$. Thus for a molecule that has two leuco moieties, the maximum molar extinction coefficient of said second color state may be more than 10,000 $M^{-1}cm^{-1}$, preferably more than 20,000, 50,000, 100,000 or even 200,000 $M^{-1}cm^{-1}$. While n could theoretically be any integer, one skilled in the art appreciates that n will typically be from 1 to 100, more preferably 1 to 50, 1 to 25, 1 to 10 or even 1 to 5.

In one preferred embodiment, the leuco entity upon conversion to the second more highly colored state provides to white substrates a color with a relative hue angle of 210 to 345, or even a relative hue angle of 240 to 320, or even a relative hue angle of 250 to 300 (e.g., 250 to 290). The relative hue angle can be determined by any suitable method as known in the art. However, preferably it may be determined as described in further detail herein with respect to deposition of the leuco entity on cotton relative to cotton absent any leuco entity.

The leuco polymer as presently disclosed is obtainable by polymerization of a leuco monomer and one or more alkene co-monomers.

The leuco monomer is an organic molecule which when dissolved in an organic solvent has a maximum molar absorption extinction coefficient of less than 1000 $M^{-1}cm^{-1}$, preferably less than 500 $M^{-1}cm^{-1}$, most preferably less than 250 $M^{-1}cm^{-1}$, and in its oxidized form has a maximum molar extinction coefficient of more than 1000 $M^{-1}cm^{-1}$, preferably greater than 4000 $M^{-1}cm^{-1}$, more preferably greater than 15000 $M^{-1}cm^{-1}$, still more preferably more than 30,000 $M^{-1}cm^{-1}$, most preferably more than 50,000 $M^{-1}cm^{-1}$ at a wavelength in the range 400-750nm, preferably 500-650nm, most preferably 530-620nm.

Molar absorption coefficients are preferably measured in an organic solvent, preferably propan-2-ol, using a cell with a path length of 1, 5 or 10 cm.

The leuco monomer may be uncharged, or may be either anionically or cationically charged in aqueous solution at a pH in the range from 6 to 11. To qualify as charged in the present application, the leuco monomer must comprise a moiety with a pKa or pKb in the range from 7.0 to 10.0. An uncharged leuco monomer may comprise no groups bearing a charge, or it may comprise groups that have opposite charges such that the charges sum to zero. An anionic leuco monomer may contain at least one group selected from the group consisting of a sulfonic acid and a carboxylic acid. A cationic leuco monomer may contain at least one quaternary amine group.

When the leuco monomer is anionic, the dye monomer preferably has at least one $SO_3$- and/or $CO_2$- group. The dye monomer may have more than one $SO_3$- and/or $CO_2$- group. Preferably the dye monomer has one, two or three $SO_3$- groups. When the leuco monomer is cationic, the cationic charge is may be delocalized into at least one aromatic ring of the leuco monomer, and is preferably delocalized into more than one aromatic ring in the oxidized leuco form.

Preferably, the leuco monomer is of the form:

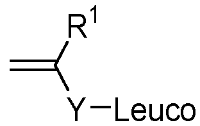

wherein Y is an organic bridging group covalently connecting a leuco moiety to the alkene moiety of the leuco monomer and $R^1$ is selected from H, unsubstituted or substituted alkyl, unsubstituted or substituted aryl, benzyl, halogen, ester, acid amide, and cyano.

Preferably, the organic bridging group is selected from -CON($R^4$)-, -$CO_2$-, -N($R^4$)-, -O-, - S-, -$SO_2$-, -$SO_2$N($R^4$)-, -N(CO$R^4$)-, and -N($SO_2R^4$)-; wherein $R^4$ is selected from the group consisting of H, phenyl, benzyl and unsubstituted or substituted $C_1$ -$C_6$ branched or linear alkyl wherein a divalent substituent of said linear or branched alkyl is located between a carbon atom and either a second carbon atom or a carbon atom and a hydrogen atom of said alkyl group and wherein said divalent substituent is selected from the group consisting of-O-, -S-, -$SO_2$-, -$CO_2$-, and an amine. Most preferably, the organic bridging group is -CON($R^4$)-. Preferably, $R^4$ is selected: from: H and Me.

In one aspect, the Y group is bound directly to a carbon atom of an aromatic ring of the leuco moiety.

Preferably, $R^1$ is selected from: H; Me; Et; Pr; $CO_2C_1$-$C_4$ branched and linear alkyl chains; phenyl; benzyl; CN; Cl; and, F. More preferably, $R^1$ is selected from: H; and, Me.

Preferably, the leuco moiety is an organic group selected from leuco diarylmethane, leuco triarylmethane, leuco oxazine, leuco thiazine, leuco hydroquinone, and leuco arylaminophenol. Most preferred classes are leuco triarylmethane, leuco hydroquinone, and leuco arylaminophenol.

Suitable diarylmethane leuco moieties for use herein include, but are not limited to, diarylmethylene derivatives capable of forming a second colored state as described herein. Suitable examples include, but are not limited to, moieties derived from Michler's methane, a diarylmethylene substituted with an -OH group (e.g., Michler's hydrol) and ethers and esters thereof, a diarylmethylene substituted with a photocleavable moiety, such as a -CN group (bis(para-N,N-dimethyl)phenyl)acetonitrile), and similar such compounds.

A preferred class per se are leuco triarylmethane. Suitable leuco monomers comprising triarylmethane leuco moieties include but are not limited to those structures shown immediately below.

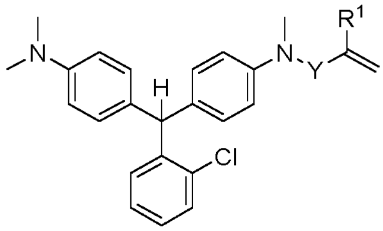
;

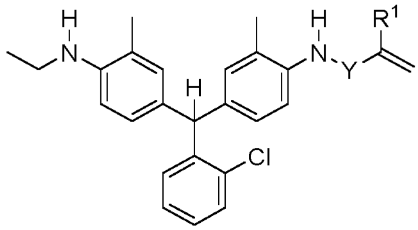
;

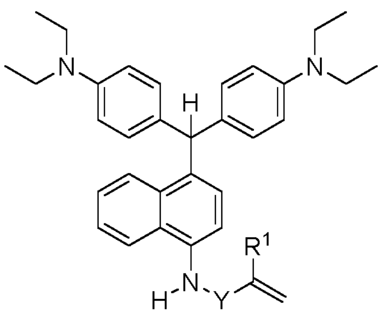
;

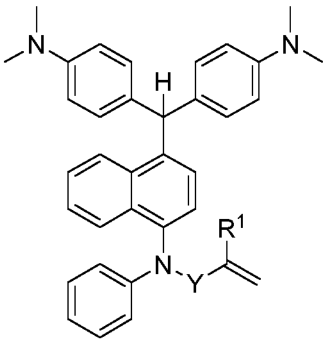
;

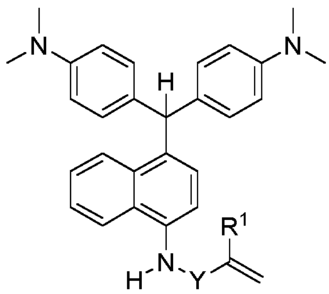
;

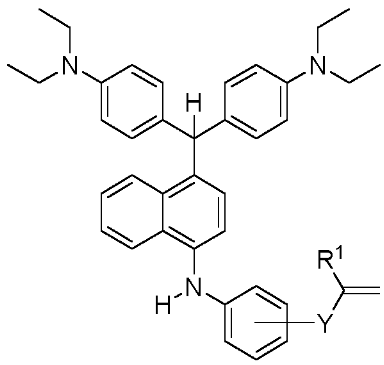
;

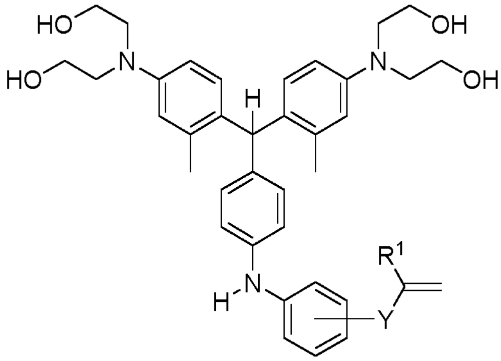
;

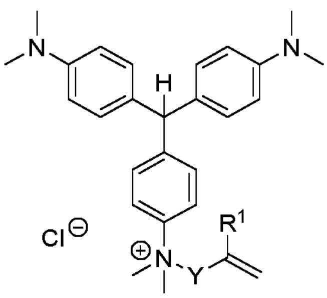
;

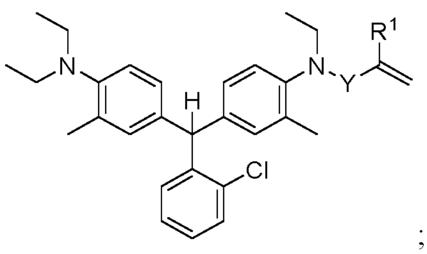
;

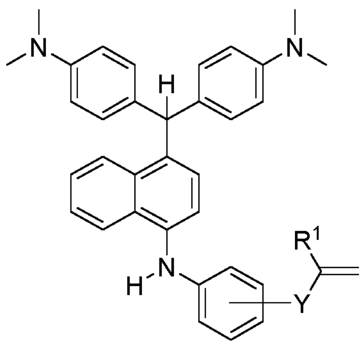
;

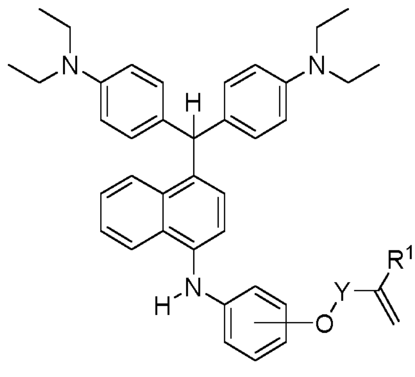
;
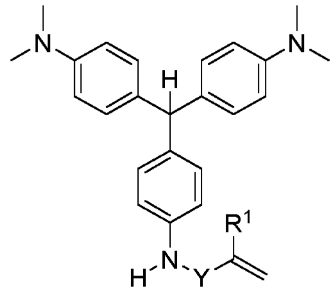
;
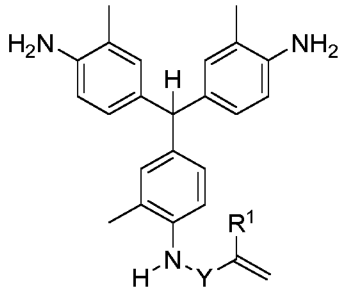
;

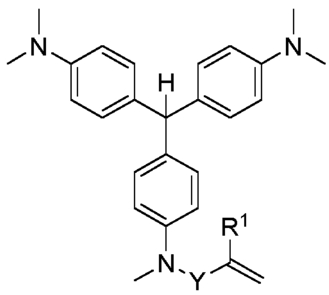
;
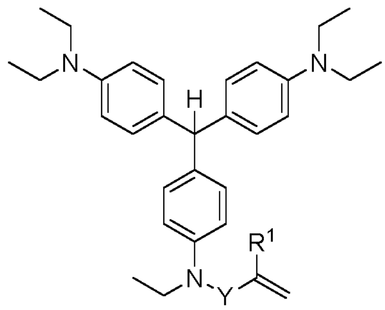
;
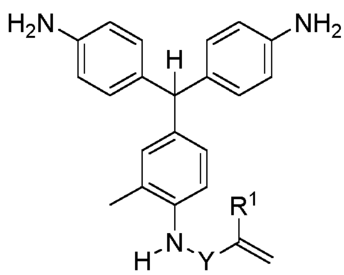
;

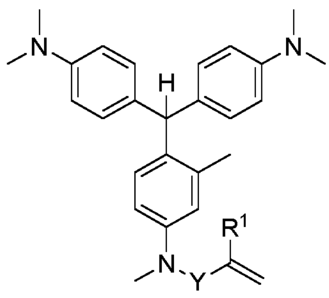
; and
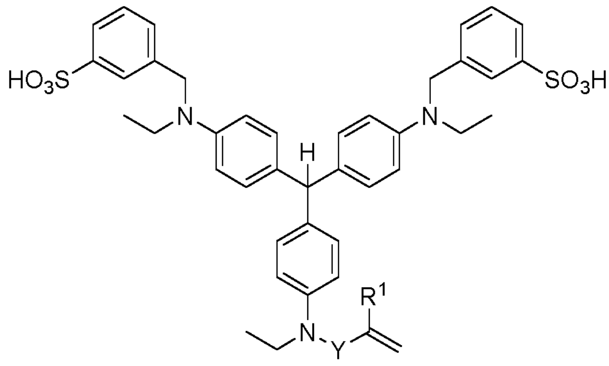
.

The leuco monomer may be further substituted by uncharged organic groups having a total molecular weight of less than 400. Preferred, uncharged organic groups are selected from: $NHCOCH_3$; $CH_3$; $C_2H_5$; $CH_3O$; $C_2H_5O$; amine; Cl; F; Br; I; $NO_2$; $CH_3SO_2$; and, CN.

Most preferably the leuco monomer is formed by reaction of a leuco compound containing an $NH_2$ or OH group with acryloyl chloride (2-propenoyl chloride) or methacryloyl chloride (2-methylprop-2-enoyl chloride). Most preferably the leuco monomer is of the form leuco-N-H-C(O)-CH=$CH_2$, leuco-NH-C-(O)-C(Me)=$CH_2$, leuco-O-C(O)-CH=$CH_2$, or leuco-O-C-(O)-C(Me)=$CH_2$. Preferably the leuco monomer is selected from the group consisting of: a leuco moiety wherein one -$NR^4$H of the leuco moiety is converted to -$NR^4$-C(O)-CH=$CH_2$ or - $NR^4$-C(O)-C(Me)=$CH_2$, wherein $R^4$ is as defined above; or a leuco moiety wherein one -OH of the leuco moiety is converted to -O-C(O)-CH=$CH_2$ or -O-C(O)-C(Me)=$CH_2$. An alternative preferred leuco monomer is:

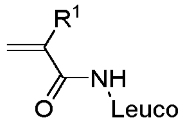
or
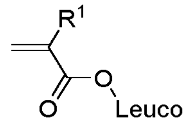

wherein the leuco moiety carries at least one sulphonate.

An alternative preferred route to form a leuco monomer is via reaction of the amine groups of a leuco compound with an alkene bearing a pendant epoxide group. For example:

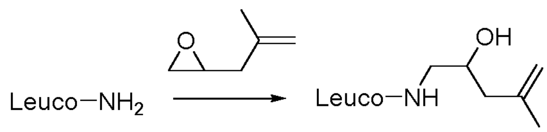

The alkene co-monomer may be selected from any suitable alkene. The co-monomer is preferably of the form:

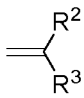 and 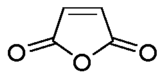

wherein $R^2$ and $R^3$ are independently selected from: H, $C_1$-$C_8$ branched, cyclic and linear alkyl chains, C(O)OH, $CO_2C_1$-$C_{18}$ branched and linear alkyl chains, -C(O)N $(C_1$-$C_{18})_2$; -C(O)N$(C_1$-$C_{18})$H; -C(O)$NH_2$; heteroaromatic, phenyl, benzyl, polyether, cyano, Cl and F. Where $C_1$-$C_{18}$ is specified a preferred range is $C_1$ to $C_4$.

The $R^2$ and $R^3$ of the co-monomer may be further substituted by charged and uncharged organic groups having a total molecular weight of less than 400. Preferred uncharged organic groups are selected from: $NHCOCH_3$, $CH_3$, $C_2H_5$, OH, CH3O, C2H5O, amine, Cl, F, Br, I, $NO_2$, $CH_3SO_2$, and CN.

The phenyl, benzyl and alkyl chains may be substituted by further organic groups selected from: OH; F; Cl; alkoxy (preferably $OCH_3$), $SO_3$-, $CO_2H$, amine, quaternary amine, acid amide and ester. When phenyl or benzyl groups are present, the aromatic is not substituted by OH.

Where the alkyl has not been specified, $C_1$ to $C_4$ branched or linear is preferred.

Examples of suitable co-monomers include but are not limited to methyl acrylate, ethyl acrylate, butyl acrylate, t-butyl acrylate, benzyl methacrylate, methyl methacrylate, ethyl methacrylate, butyl methacrylate, t-butyl methacrylate, styrene, 2-vinyl pyridine, 4-vinyl phenol, 9-vinyl-9H-carbazole, 4,4-dimethyl-2-(prop-1-ene-2-yl)-oxazol-5(4H)-one, vinyl acetate, acrylonitrile, 4,4-dimethyl-2-vinyloxazol-5(4H)-one, glycidyl methacrylate, stearyl methacrylate, poly(ethylene glycol) ethyl ether methacrylate, poly(ethylene glycol) methyl ether methacrylate, 2-hydroxypropyl methacrylate, 4-pentenoic acid, ethyl-2-cyanoacrylate, di(ethylene glycol) methyl ether methacrylate, isopropyl methacrylate, glycosyloxyethyl methacrylate, 2,2,2-trifluoroethyl methacrylate, 3-chloro-2-hydroxypropyl methacrylate, 2-ethylhexyl methacrylatee, 2(methylthio)ethyl methacrylate, cyclohexyl methacrylate, hexyl methacrylate, 2-isocyanatoethyl methacrylate, furfuryl methacrylate, tetrahydrofurfuryl methacrylate, 2-acrylamido-2-methyl-1-propanesulfonic acid, N-(3-aminophenyl)acrylamide, 2-(tert-butylamino)ethyl methacrylate, N-(6-aminopyridin-2-yl)acrylate, 4-vinylphenylboronic acid, 2-butoxyethyl methacryate, and 2-acrylamidopyridine. Preferred co-monomers include but are not limited to N,N-dimethylaminoethyl methacrylate, 2-hydroxyethyl methacrylate, 2-hydroxyethyl acrylate, acrylamide, sodium 4-vinylbenzene sulfonate, N,N-diethylaminoethyl methacrylate, acrylic acid, sodium acrylic acid, methacrylic acid, sodium methacrylic acid, vinyl pyrrolidone, maleic anhydride, 2-aminoethyl methacrylate hydrochloride, 2-aminoethyl methacrylate hydrochloride, N,N-dimethylacrylamide, N-isopropylacrylamide, potassium 5-methyl-4-oxohex-5-ene-1-sulfonate, itaconic acid, potassium 3-sulfopropyl methacrylate, 2-(dimethylamino)ethyl methacrylamide, 4-vinylbenzoic acid, vinyl methyl ether, 2-aminoethyl methacrylate, and 4-ethenyl-N,N'-di(C 1 -C4)alkylbenzenecarboximidamide.

Mixtures of co-monomers may be used. It is preferred that the > 50 wt%, more preferably > 80 wt%, of the comonomers are selected from co-monomers that have a molecular weight of less than 300 and contains an amine, amide, OH, $OCH_3$, $SO_3$- or COO- group. Most preferably, the co-monomers contain an amine or $OCH_3$ group.

Most preferably > 50 wt%, preferably > 80 wt%, of the co-monomers are acrylates with pendant tertiary amine groups, most preferably selected from N,N-dimethylaminoethyl methacrylate and N,N-diethylaminoethyl methacrylate.

Additional co-monomers may be added to the polymer which are covalently bound to radical photobleaches such as vitamin K3 or 2-ethyl anthraquinone. Other organic active ingredients such as sunscreens, antifungal agents, bleach catalysts, antimicrobial, antiwrinkle may also be covalently linked to the polymer. Examples of such ingredients are 5-chloro-2-(2,4-dichlorophenoxy)phenol, 6-acetoxy-2,4-dimethyl-m-dioxane, para-aminobenzoic acid, diethanolaminep-methoxy cinnamate and oxybenzone. Most preferably the ingredient contains an $NH_2$ group and the monomer is created in an analogous manner to the leuco monomer. These are preferably present at a lower level than the leuco monomer.

The leuco polymer is obtained (formed) by polymerization of the integers (a) leuco monomer and (b) alkene co-monomer as detailed above. The leuco polymer may be derived from a mixture of different leuco monomers, for example carrying different leuco moieties, and may also incorporate more than one alkene co-monomer. Preferably, the leuco polymer has a solubility of greater than 1 mg/L in a 1 g/L sodium dodecyl sulfate aqueous solution at pH=7.

Preferably the leuco polymer gives a hue to the cloth with a relative hue angle of 210 to 345, or even a relative hue angle of 240 to 320, or even a relative hue angle of 250 to 300 (e.g., 250 to 290). The relative hue angle can be

determined by any suitable method as known in the art. However, preferably it may be determined as described in further detail herein with respect to deposition of the leuco entity on cotton relative to cotton absent any leuco entity.

The polymer is obtainable by co-polymerization of the dye monomer with suitable unsaturated organic co-monomers. Preferably the polymer contains 0.1 to 30 mole % leuco monomer units, more preferably 1 to 15 mole % leuco monomers units, most preferably 2 to 10 mole % leuco monomer units.

Preferably the polymer contains less than 20 mole %, more preferably less than 5 mole % of co-monomers bearing $CO_2$- or $SO_3$- groups.

The monomers within the polymer may be arranged in any suitable manner. For example as alternating copolymers possessing regularly alternating monomer residues; periodic copolymers having monomer residue types arranged in a repeating sequence; random copolymers having a random sequence of monomer residue types; statistical copolymers having monomer residues arranged according to a known statistical rule; block copolymers having two or more homopolymer subunits linked by covalent bonds. Most preferably the polymer is a random copolymer. The polymer should have a molecular weight 500 and greater, preferably 2000 and greater, preferably 5000 and greater. In this context the molecular weight is the number average molecular weight. This is the ordinary arithmetic mean of the molecular weights of the individual macromolecules. It is determined by measuring the molecular weight of *j* polymer molecules, summing the weights, and dividing by *j*. Molecular weights are determined by Gel Permeation Chromatography.

The leuco polymer may have a solubility of greater than 10 mg/L in a 1 g/L sodium dodecyl sulfate solution at pH=7.

Water solubility is enhanced by the presence of hydroxy, amino and charged groups in the polymer, preferably anionic charged groups. Preferably the polymer is of the form:

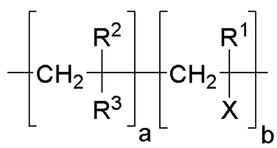

wherein a and b are integers each greater than or equal to 1 and X = Y-Leuco.

Preferably, the index a is greater than the index b (a>b). More preferably the ratio a:b is from 99.9:0.1 to 70:30.

It is preferred that the dye-polymer has a number average molecular weight in the range from 500 to 500000, preferably from 2000 to 100000, more preferably 5000 to 50000.

The present invention relates to a class of leuco colorants that may be useful for use in laundry care compositions, such as liquid laundry detergent, to provide a hue to whiten textile substrates. Leuco colorants are compounds that are essentially colorless or only lightly colored but are capable of developing an intense color upon activation. One advantage of using leuco compounds in laundry care compositions is that such compounds, being colorless until activated, allow the laundry care composition to exhibit its own color. The leuco colorant generally does not alter the primary color of the laundry care composition. Thus, manufacturers of such compositions can formulate a color that is most attractive to consumers without concern for added ingredients, such as bluing agents, affecting the final color value of the composition.

The leuco moiety covalently bound to the alkene monomer can be any suitable leuco moiety. Suitable leuco moieties include, but are not limited to, diarylmethane moieties, triarylmethane moieties, oxazine moieties, thiazine moieties, hydroquinone moieties, and arylaminophenol moieties. In a more particular aspect, the leuco moiety is a univalent or polyvalent moiety derived by removal of one or more hydrogen atoms from a structure of Formula (I), (II), (III), (IV), or (V) described below:

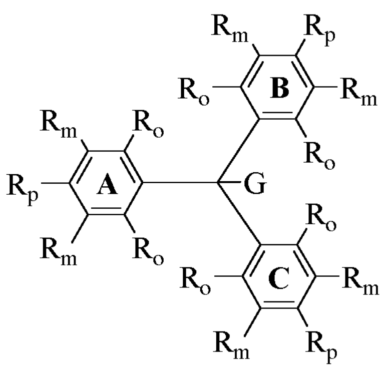

; (I)

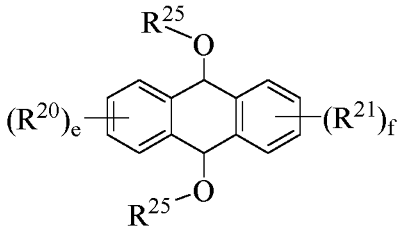

; (II)

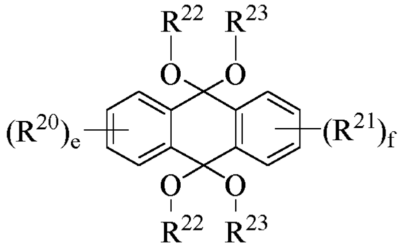

; (III)

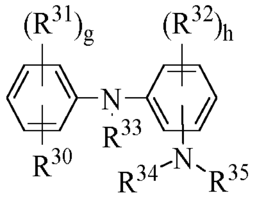

; and (IV)

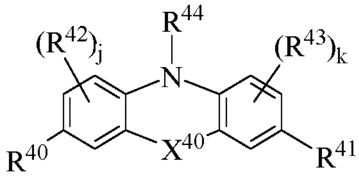

; (V)

wherein the ratio of Formula I-V to its oxidized form is at least 1:19, 1:9, or 1:3, preferably at least 1:1, more preferably at least 3:1, most preferably at least 9:1 or even 19:1.

In the structure of Formula (I), each individual $R_o$, $R_m$ and $R_p$ group on each of rings A, B and C is independently selected from the group consisting of hydrogen, deuterium and $R^5$; each $R^5$ is independently selected from the group consisting of halogens, nitro, alkyl, substituted alkyl, aryl, substituted aryl, alkaryl, substituted alkaryl, $-(CH_2)_n-O-R^1$, $-(CH_2)_n-NR^1R^2$, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $NR^1C(O)NR^2R^3$, $-OR^1$, $-NR^1R^2$, $-P(O)_2R^1$, $-P(O)(OR^1)_2$, $-P(O)(OR^1)O^-$, and $-P(O)(O^-)_2$, wherein the index n is an integer from 0 to 4, preferably from 0 to 1, most preferably 0; wherein two $R_o$ on different A, B and C rings may combine to form a fused ring of five or more members; when the fused ring is six or more members, two $R_o$ on different A, B and C rings may combine to form an organic linker optionally containing one or more heteroatoms; in one embodiment two $R_o$ on different A, B and C rings combine to form a heteroatom bridge selected from -O- and -S-creating a six member fused ring; an $R_o$ and $R_m$ on the same ring or an $R_m$ and $R_p$ on the same ring may combine to form a fused aliphatic ring or fused aromatic ring either of which may contain heteroatoms; on at least one of the three rings A, B or C, preferably at least two, more preferably at least three, most preferably all four of the $R_o$ and $R_m$ groups are hydrogen, preferably all four $R_o$ and $R_m$ groups on at least two of the rings A, B and C are hydrogen; in some embodiments, all $R_o$ and $R_m$ groups on rings A, B and C are hydrogen; preferably each $R_p$ is independently selected from hydrogen, $-OR^1$ and $-NR^1R^2$; no more than two, preferably no more than one of $R_p$ is hydrogen, preferably none are hydrogen; more preferably at least one, preferably two, most preferably all three $R_p$ are $-NR^1R^2$; in some embodiments, one or even two of the Rings A, B and C may be replaced with an independently selected $C_3$-$C_9$ heteroaryl ring comprising one or two heteroatoms independently selected from O, S and N, optionally substituted with one or more independently selected $R^5$ groups; G is independently selected from the group consisting of hydrogen, deuterium, $C_1$-$C_{16}$ alkoxide, phenoxide, bisphenoxide, nitrite, nitrile, alkyl amine, imidazole, arylamine, polyalkylene oxide, halides, alkylsulfide, aryl sulfide, or phosphine oxide; in one aspect the fraction

[(deuterium)/(deuterium + hydrogen)] for G is at least 0.20, preferably at least 0.40, even more preferably at least 0.50 and most preferably at least 0.60 or even at least 0.80;
wherein any two of $R^1$, $R^2$ and $R^3$ attached to the same heteroatom can combine to form a ring of five or more members optionally comprising one or more additional heteroatoms selected from the group consisting of -O-, $-NR^{15}-$, and -S-.

In the structure of Formula (II) - (III), e and f are independently integers from 0 to 4; each $R^{20}$ and $R^{21}$ is independently selected from the group consisting of halogens, a nitro group, alkyl groups, substituted alkyl groups, $-NC(O)OR^1$, $-NC(O)SR^1$, $-OR^1$, and $-NR^1R^2$; each $R^{25}$ is independently selected from the group consisting of monosaccharide moiety, disaccharide moiety, oligosaccharide moiety, and polysaccharide moiety, $-C(O)R^1$, $-C(O)OR^1$, $-C(O)NR^1R^2$; and each $R^{22}$ and $R^{23}$ is independently selected from the group consisting of hydrogen, alkyl groups, and substituted alkyl groups.

In the structure of Formula (IV), $R^{30}$ is positioned ortho or para to the bridging amine moiety and is selected from the group consisting of $-OR^{38}$ and $-NR^{36}R^{37}$, each $R^{36}$ and $R^{37}$ is independently selected from the group consisting of hydrogen, alkyl groups, substituted alkyl groups, aryl groups, substituted aryl groups, acyl groups, $R^4$, $-C(O)OR^1$, $-C(O)R^1$, and $-C(O)NR^1R^2$; $R^{38}$ is selected from the group consisting of hydrogen, acyl groups, $-C(O)OR^1$, $-C(O)R^1$, and $-C(O)NR^1R^2$; g and h are independently integers from 0 to 4; each $R^{31}$ and $R^{32}$ is independently selected from the group consisting of alkyl groups, substituted alkyl groups, aryl groups, substituted aryl groups, alkaryl, substituted alkaryl, $-(CH_2)_n-O-R^1$, $-(CH_2)_n-NR^1R^2$, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$, and $-P(O)(O^-)_2$, wherein the index n is an integer from 0 to 4, preferably from 0 to 1, most preferably 0; $-NR^{34}R^{35}$ is positioned ortho or para to the bridging amine moiety and $R^{34}$ and $R^{35}$ are independently selected from the group consisting of hydrogen, alkyl, substituted alkyl, aryl, substituted aryl, alkaryl, substituted alkaryl, and $R^4$; $R^{33}$ is independently selected from the group consisting of hydrogen, $-S(O)_2R^1$, $-C(O)N(H)R^1$; $-C(O)OR^1$; and $-C(O)R^1$; when g is 2 to 4, any two adjacent $R^{31}$ groups may combine to form a fused ring of five or more members wherein no more than two of the atoms in the fused ring may be nitrogen atoms.

In the structure of Formula (V), $X^{40}$ is selected from the group consisting of an oxygen atom, a sulfur atom, and $NR^{45}$; $R^{45}$ is independently selected from the group consisting of hydrogen, deuterium, alkyl, substituted alkyl, aryl, substituted aryl, alkaryl, substituted alkaryl, $-S(O)_2OH$, $-S(O)_2O^-$, $-C(O)OR^1$, $-C(O)R^1$, and $-C(O)NR^1R^2$; $R^{40}$ and $R^{41}$ are independently selected from the group consisting of $-(CH_2)_n-O-R^1$, $-(CH_2)_n-NR^1R^2$, wherein the index n is an integer from 0 to 4, preferably from 0 to 1, most preferably 0; j and k are independently integers from 0 to 3; $R^{42}$ and $R^{43}$ are independently selected from the group consisting of alkyl, substituted alkyl, aryl, substituted aryl, alkaryl, substituted alkaryl, $-S(O)_2R^1$, $-C(O)NR^1R^2$, $-NC(O)OR^1$, $-NC(O)SR^1$, $-C(O)OR^1$, $-C(O)R^1$, $-(CH_2)_n-O-R^1$, $-(CH_2)_n-NR^1R^2$, wherein the index n is an integer from 0 to 4, preferably from 0 to 1, most preferably 0; $R^{44}$ is $-C(O)R^1$, $-C(O)NR^1R^2$, and $-C(O)OR^1$.

In the structures of Formula (I) - (V), wherein any charge present in any of the preceeding groups is balanced with a suitable independently selected internal or external counterion. Suitable independently selected external counterions may be cationic or anionic. Examples of suitable cations include but are not limited to one or more metals preferably selected from Group I and Group II, the most preferred of these being Na, K, Mg, and Ca, or an organic cation such as iminium, ammonium, and phosphonium. Examples of suitable anions include but are not limited to: fluoride, chloride, bromide, iodide, perchlorate, hydrogen sulfate, sulfate, aminosulfate, nitrate, dihydrogen phosphate, hydrogen phosphate, phosphate, bicarbonate, carbonate, methosulfate, ethosulfate, cyanate, thiocyanate, tetrachlorozincate, borate, tetrafluoroborate, acetate, chloroacetate, cyanoacetate, hydroxyacetate, aminoacetate, methylaminoacetate, di- and trichloroacetate, 2-chloro-propionate, 2-hydroxypropionate, glycolate, thioglycolate, thioacetate, phenoxyacetate, trimethylacetate, valerate, palmitate, acrylate, oxalate, malonate, crotonate, succinate, citrate, methylene-bis-thioglycolate, ethylene-bis-iminoacetate, nitrilotriacetate, fumarate, maleate, benzoate, methylbenzoate, chlorobenzoate, dichlorobenzoate, hydroxybenzoate, aminobenzoate, phthalate, terephthalate, indolylacetate, chlorobenzenesulfonate, benzenesulfonate, toluenesulfonate, biphenyl-sulfonate and chlorotoluenesulfonate. Those of ordinary skill in the art are well aware of different counterions which can be used in place of those listed above.

In the structures of Formula (I) - (V), $R^1$, $R^2$, $R^3$, and $R^{15}$ are independently selected from the group consisting of hydrogen, alkyl, substituted alkyl, aryl, substituted aryl, alkaryl, substituted alkaryl, and $R^4$; wherein $R^4$ is an organic group composed of one or more organic monomers with said monomer molecular weights ranging from 28 to 500, preferably 43 to 350, even more preferably 43 to 250, wherein the organic group may be substituted with one or more additional leuco colorant moieties conforming to the structure of Formula I-V. In one aspect, $R^4$ is selected from the group consisting of alkyleneoxy (polyether), oxoalkyleneoxy (polyesters), oxoalkyleneamine (polyamides), epichlorohydrin, quaternized epichlorohydrin, alkyleneamine, hydroxyalkylene, acyloxyalkylene, carboxyalkylene, carboalkoxyalkylene, and sugar. Where any leuco colorant comprises an $R^4$ group with three or more contiguous monomers, that leuco colorant is defined herein as a "polymeric leuco colorant". One skilled in the art knows that the properties of a compound with regard to any of a number of characteristic attributes such as solubility, partitioning, deposition, removal, staining, are related to the placement, identity and number of such contiguous monomers incorporated therein. The skilled artisan can therefore adjust the placement, identity and number of such contiguous monomers to alter any

particular attribute in a more or less predictable fashion.

The leuco polymer present in the laundry care composition can be any of the leuco polymers described above in connection with the earlier embodiments of the invention. The leuco polymer can be present in the laundry care composition in any suitable amount. In one aspect, the laundry care composition comprises from 0.001 wt.% to 2.0 wt.%, preferably 0.05 wt.% to 0.2 wt.%, of the leuco polymer. In such an embodiment, the laundry care composition can comprise from 2 wt.% to 70 wt.% of surfactant (either a single surfactant or, more preferably, a combination of surfactants selected from those discussed below).

LAUNDRY CARE INGREDIENTS

Surfactant system

The products of the present invention may comprise from 0.00 wt%, more typically from 0.10 to 80% by weight of a surfactant. In one aspect, such compositions may comprise from 5% to 50% by weight of surfactant. Surfactants utilized can be of the anionic, nonionic, amphoteric, ampholytic, zwitterionic, or cationic type or can comprise compatible mixtures of these types. Anionic and nonionic surfactants are typically employed if the fabric care product is a laundry detergent. On the other hand, cationic surfactants are typically employed if the fabric care product is a fabric softener.

*Anionic surfactant*

Useful anionic surfactants can themselves be of several different types. For example, water-soluble salts of the higher fatty acids, i.e., "soaps", are useful anionic surfactants in the compositions herein. This includes alkali metal soaps such as the sodium, potassium, ammonium, and alkylolammonium salts of higher fatty acids containing from 8 to 24 carbon atoms, or even from 12 to 18 carbon atoms. Soaps can be made by direct saponification of fats and oils or by the neutralization of free fatty acids. Particularly useful are the sodium and potassium salts of the mixtures of fatty acids derived from coconut oil and tallow, i.e., sodium or potassium tallow and coconut soap.

Preferred alkyl sulphates are C8-18 alkyl alkoxylated sulphates, preferably a C12-15 alkyl or hydroxyalkyl alkoxylated sulphates. Preferably the alkoxylating group is an ethoxylating group. Typically the alkyl alkoxylated sulphate has an average degree of alkoxylation from 0.5 to 30 or 20, or from 0.5 to 10. The alkyl group may be branched or linear. The alkoxylated alkyl sulfate surfactant may be a mixture of alkoxylated alkyl sulfates, the mixture having an average (arithmetic mean) carbon chain length within the range of 12 to 30 carbon atoms, or an average carbon chain length of 12 to 15 carbon atoms, and an average (arithmetic mean) degree of alkoxylation of from 1 mol to 4 mols of ethylene oxide, propylene oxide, or mixtures thereof, or an average (arithmetic mean) degree of alkoxylation of 1.8 mols of ethylene oxide, propylene oxide, or mixtures thereof. The alkoxylated alkyl sulfate surfactant may have a carbon chain length from 10 carbon atoms to 18 carbon atoms, and a degree of alkoxylation of from 0.1 to 6 mols of ethylene oxide, propylene oxide, or mixtures thereof. The alkoxylated alkyl sulfate may be alkoxylated with ethylene oxide, propylene oxide, or mixtures thereof. Alkyl ether sulfate surfactants may contain a peaked ethoxylate distribution. Specific example include C12-C15 EO 2.5 Sulfate, C14-C15 EO 2.5 Sulfate and C12-C15 EO 1.5 Sulfate derived from NEODOL® alcohols from Shell and C12-C14 EO3 Sulfate, C12-C16 EO3 Sulfate, C12-C14 EO2 Sulfate and C12-C14 EO1 Sulfate derived from natural alcohols from Huntsman. The AES may be linear, branched, or combinations thereof. The alkyl group may be derived from synthetic or natural alcohols such as those supplied by the tradename Neodol® by Shell, Safol®, Lial®, and Isalchem® by Sasol or midcut alcohols derived from vegetable oils such as coconut and palm kernel. Another suitable anionic detersive surfactant is alkyl ether carboxylate, comprising a C10-C26 linear or branched, preferably C10-C20 linear, most preferably C16-C18 linear alkyl alcohol and from 2 to 20, preferably 7 to 13, more preferably 8 to 12, most preferably 9.5 to 10.5 ethoxylates. The acid form or salt form, such as sodium or ammonium salt, may be used, and the alkyl chain may contain one cis or trans double bond. Alkyl ether carboxylic acids are available from Kao (Akypo®), Huntsman (Empicol®) and Clariant (Emulsogen®).

Other useful anionic surfactants can include the alkali metal salts of alkyl benzene sulfonates, in which the alkyl group contains from 9 to 15 carbon atoms, in straight chain (linear) or branched chain configuration. In some examples, the alkyl group is linear. Such linear alkylbenzene sulfonates are known as "LAS." In other examples, the linear alkylbenzene sulfonate may have an average number of carbon atoms in the alkyl group of from 11 to 14. In a specific example, the linear straight chain alkylbenzene sulfonates may have an average number of carbon atoms in the alkyl group of 11.8 carbon atoms, which may be abbreviated as C11.8 LAS. Preferred sulphonates are C10-13 alkyl benzene sulphonate. Suitable alkyl benzene sulphonate (LAS) may be obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be

suitable. In one aspect a magnesium salt of LAS is used. Suitable anionic sulfonate surfactants for use herein include water-soluble salts of C8-C18 alkyl or hydroxyalkyl sulfonates; C11-C18 alkyl benzene sulfonates (LAS), modified alkylbenzene sulfonate (MLAS) as discussed in WO 99/05243, WO 99/05242, WO 99/05244, WO 99/05082, WO 99/05084, WO 99/05241, WO 99/07656, WO 00/23549, and WO 00/23548; methyl ester sulfonate (MES); and alpha-olefin sulfonate (AOS). Those also include the paraffin sulfonates may be monosulfonates and/or disulfonates, obtained by sulfonating paraffins of 10 to 20 carbon atoms. The sulfonate surfactant may also include the alkyl glyceryl sulfonate surfactants.

Anionic surfactants of the present invention may exist in an acid form, and said acid form may be neutralized to form a surfactant salt which is desirable for use in the present detergent compositions. Typical agents for neutralization include the metal counterion base such as hydroxides, e.g., NaOH or KOH. Further preferred agents for neutralizing anionic surfactants of the present invention and adjunct anionic surfactants or cosurfactants in their acid forms include ammonia, amines, or alkanolamines. Alkanolamines are preferred. Suitable non-limiting examples including monoethanolamine, diethanolamine, triethanolamine, and other linear or branched alkanolamines known in the art; for example, highly preferred alkanolamines include 2-amino-1-propanol, 1-aminopropanol, monoisopropanolamine, or 1-amino-3-propanol.

*Nonionic surfactant*

Preferably the composition comprises a nonionic detersive surfactant. Suitable nonionic surfactants include alkoxylated fatty alcohols. The nonionic surfactant may be selected from ethoxylated alcohols and ethoxylated alkyl phenols of the formula R(OC2H4),OH, wherein R is selected from the group consisting of aliphatic hydrocarbon radicals containing from 8 to 15 carbon atoms and alkyl phenyl radicals in which the alkyl groups contain from 8 to 12 carbon atoms, and the average value of n is from 5 to 15. Other non-limiting examples of nonionic surfactants useful herein include: C8-C18 alkyl ethoxylates, such as, NEODOL® nonionic surfactants from Shell; C6-C12 alkyl phenol alkoxylates where the alkoxylate units may be ethyleneoxy units, propyleneoxy units, or a mixture thereof; C12-C18 alcohol and C6-C12 alkyl phenol condensates with ethylene oxide/propylene oxide block polymers such as Pluronic® from BASF; C14-C22 mid-chain branched alcohols, BA; C14-C22 mid-chain branched alkyl alkoxylates, BAEx, wherein x is from 1 to 30; alkylpolysaccharides; specifically alkylpolyglycosides; polyhydroxy fatty acid amides; and ether capped poly(oxyalkylated) alcohol surfactants. Specific example include C12-C15 EO7 and C14-C15 EO7 NEODOL® nonionic surfactants from Shell, C12-C14 EO7 and C12-C14 EO9 Surfonic® nonionic surfactants from Huntsman.

Highly preferred nonionic surfactants are the condensation products of Guerbet alcohols with from 2 to 18 moles, preferably 2 to 15, more preferably 5-9 of ethylene oxide per mole of alcohol. Suitable nonionic surfactants include those with the trade name Lutensol® from BASF. Lutensol XP-50 is a Guerbet ethoxylate that contains an average of 5 ethoxy groups. Lutensol XP-80 and containing an average of 8 ethoxy groups. Other suitable non-ionic surfactants for use herein include fatty alcohol polyglycol ethers, alkylpolyglucosides and fatty acid glucamides, alkylpolyglucosides based on Guerbet alcohols.

*Amphoteric surfactant*

The surfactant system may include amphoteric surfactant, such as amine oxide. Preferred amine oxides are alkyl dimethyl amine oxide or alkyl amido propyl dimethyl amine oxide, more preferably alkyl dimethyl amine oxide and especially coco dimethyl amino oxide. Amine oxide may have a linear or mid-branched alkyl moiety.

*Ampholytic Surfactants*

The surfactant system may comprise an ampholytic surfactant. Specific, non-limiting examples of ampholytic surfactants include: aliphatic derivatives of secondary or tertiary amines, or aliphatic derivatives of heterocyclic secondary and tertiary amines in which the aliphatic radical can be straight- or branched-chain. One of the aliphatic substituents may contain at least 8 carbon atoms, for example from 8 to 18 carbon atoms, and at least one contains an anionic water-solubilizing group, e.g. carboxy, sulfonate, sulfate. See U.S. Pat. No. 3,929,678 at column 19, lines 18-35, for suitable examples of ampholytic surfactants.

*Zwitterionic surfactant*

Zwitterionic surfactants are known in the art, and generally include surfactants which are neutrally charged overall, but carry at least one positive charged atom/group and at least one negatively charged atom/group. Examples of zwitterionic surfactants include: derivatives of secondary and tertiary amines, derivatives of heterocyclic secondary and tertiary amines, or derivatives of quaternary ammonium, quaternary phosphonium or tertiary sulfonium compounds. See U.S. Patent No. 3,929,678 at column 19, line 38 through column 22, line 48, for examples of zwitterionic surfactants;

betaines, including alkyl dimethyl betaine and cocodimethyl amidopropyl betaine, $C_8$ to $C_{18}$ (for example from $C_{12}$ to $C_{18}$) amine oxides and sulfo and hydroxy betaines, such as N-alkyl-N,N-dimethylammino-1-propane sulfonate where the alkyl group can be $C_8$ to $C_{18}$ and in certain embodiments from $C_{10}$ to $C_{14}$. A preferred zwitterionic surfactant for use in the present invention is the cocoamidopropyl betaine.

*Cationic surfactants*

Examples of cationic surfactants include quaternary ammonium surfactants, which can have up to 26 carbon atoms specific. Additional examples include a) alkoxylate quaternary ammonium (AQA) surfactants as discussed in U.S. Pat. No. 6,136,769; b) dimethyl hydroxyethyl quaternary ammonium as discussed in U.S. Pat. No. 6,004,922; c) polyamine cationic surfactants as discussed in WO 98/35002, WO 98/35003, WO 98/35004, WO 98/35005, and WO 98/35006; d) cationic ester surfactants as discussed in U.S. Pat. Nos. 4,228,042, 4,239,660 4,260,529 and U.S. Pat. No. 6,022,844; and e) amino surfactants as discussed in U.S. Pat. No. 6,221,825 and WO 00/47708, and specifically amido propyldimethyl amine (APA). Useful cationic surfactants also include those described in U.S. Pat. No. 4,222,905, Cockrell, issued Sep. 16, 1980, and in U.S. Pat. No. 4,239,659, Murphy, issued Dec. 16, 1980. Quaternary ammonium compounds may be present in fabric enhancer compositions, such as fabric softeners, and comprise quaternary ammonium cations that are positively charged polyatomic ions of the structure $NR_4^+$, where R is an alkyl group or an aryl group.

*Adjunct Cleaning Additives*

The cleaning compositions of the invention may also contain adjunct cleaning additives. The precise nature of the cleaning adjunct additives and levels of incorporation thereof will depend on the physical form of the cleaning composition, and the precise nature of the cleaning operation for which it is to be used.

The adjunct cleaning additives may be selected from the group consisting of builders, structurants or thickeners, clay soil removal/anti-redeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds supressors, softeners, and perfumes. This listing of adjunct cleaning additives is exemplary only, and not by way of limitation of the types of adjunct cleaning additives which can be used. In principle, any adjunct cleaning additive known in the art may be used in the instant invention.

Polymers

The composition may comprise one or more polymers. Non-limiting examples, all of which may be optionally modified, include polyethyleneimines, carboxymethylcellulose, poly(vinylpyrrolidone), poly (ethylene glycol), poly(vinyl alcohol), poly(vinylpyridine-N-oxide), poly(vinylimidazole), polycarboxylates or alkoxylated substituted phenols (ASP). as described in WO 2016/041676. An example of ASP dispersants, include but are not limited to, HOSTAPAL BV CONC S1000 available from Clariant.

Polyamines may be used for grease, particulate removal or stain removal. A wide variety of amines and polyakyleneimines can be alkoxylated to various degrees to achieve hydrophobic or hydrophilic cleaning. Such compounds may include, but are not limited to, ethoxylated polyethyleneimine, ethoxylated hexamethylene diamine, and sulfated versions thereof. Useful examples of such polymers are HP20 available from BASF or a polymer having the following general structure:

$$bis((C_2H_5O)\ (C_2H_4O)_n)(CH_3)\text{-}N\text{+-}C_xH_{2x}\text{-}N\text{+-}(CH_3)\text{-}bis((C_2H_5O)(C_2H_4O)_n),$$

wherein n = from 20 to 30, and x = from 3 to 8, or sulphated or sulphonated variants thereof. Polypropoxylated-polyethoxylated amphiphilic polyethyleneimine derivatives may also be included to achieve greater grease removal and emulsification. These may comprise alkoxylated polyalkylenimines, preferably having an inner polyethylene oxide block and an outer polypropylene oxide block. Detergent compositions may also contain unmodified polyethyleneimines useful for enhanced beverage stain removal. PEI's of various molecular weights are commercially available from the BASF Corporation under the trade name Lupasol® Examples of suitable PEI's include, but are not limited to, Lupasol FG®, Lupasol G-35®.

The composition may comprise one or more carboxylate polymers, such as a maleate/acrylate random copolymer or polyacrylate homopolymer useful as polymeric dispersing agents. Alkoxylated polycarboxylates such as those prepared from polyacrylates are also useful to provide clay dispersancy. Such materials are described in WO 91/08281. Chemically, these materials comprise polyacrylates having one ethoxy side-chain per every 7-8 acrylate units. The side-chains are of the formula $-(CH_2CH_2O)_m\ (CH_2)_nCH_3$ wherein m is 2-3 and n is 6-12. The side-chains are ester or ether-linked to the polyacrylate "backbone" to provide a "comb" polymer type structure.

Preferred amphiphilic graft co-polymer(s) comprise (i) polyethyelene glycol backbone; and (ii) at least one pendant moiety selected from polyvinyl acetate, polyvinyl alcohol and mixtures thereof. An example of an amphiphilic graft co-polymer is Sokalan HP22, supplied from BASF.

Alkoxylated substituted phenols as described in WO 2016/041676 are also suitable examples of polymers that provide clay dispersancy. Hostapal BV Conc S1000, available from Clariant, is one non-limiting example of an ASP dispersant, .

Preferably the composition comprises one or more soil release polymers. Suitable soil release polymers are polyester soil release polymers such as Repel-o-tex polymers, including Repel-o-tex SF, SF-2 and SRP6 supplied by Rhodia. Other suitable soil release polymers include Texcare polymers, including Texcare SRA100, SRA300, SRN100, SRN170, SRN240, SRN260 SRN300 and SRN325 supplied by Clariant. Other suitable soil release polymers are Marloquest polymers, such as Marloquest SL, HSCB, L235M, B, G82 supplied by Sasol. Other suitable soil release polymers include methyl-capped ethoxylated propoxylated soil release polymers as described in US 9,365,806.

Preferably the composition comprises one or more polysaccharides which may in particular be chosen from carboxymethyl cellulose, methylcarboxymethylcellulose, sulfoethylcellulose, methylhydroxyethylcellulose, carboxymethyl xyloglucan, carboxymethyl xylan, sulfoethylgalactomannan, carboxymethyl galactomannan, hydoxyethyl galactomannan, sulfoethyl starch, carboxymethyl starch, and mixture thereof. Other polysaccharides suitable for use in the present invention are the glucans. Preferred glucans are Poly alpha-1,3-glucan which is a polymer comprising glucose monomeric units linked together by glycosidic linkages (i.e., glucosidic linkages), wherein at least 50% of the glycosidic linkages are alpha-1,3-glycosidic linkages. Poly alpha-1,3-glucan is a type of polysaccharide. Poly alpha-1,3-glucan can be enzymatically produced from sucrose using one or more glucosyltransferase enzymes, such as described in U.S. Pat. No. 7,000,000, and U.S. Patent Appl. Publ. Nos. 2013/0244288 and 2013/, for example.

Other suitable polysaccharides for use in the composition are cationic polysaccharides. Examples of cationic polysaccharides include cationic guar gum derivatives, quaternary nitrogen-containing cellulose ethers, and synthetic polymers that are copolymers of etherified cellulose, guar and starch. When used, the cationic polymers herein are either soluble in the composition or are soluble in a complex coacervate phase in the composition formed by the cationic polymer and the anionic, amphoteric and/or zwitterionic surfactant component described hereinbefore. Suitable cationic polymers are described in U.S. Pat. Nos. 3,962,418; 3,958,581; and U.S. Publication No. 2007/0207109A1.

Polymers can also function as deposition aids for other detergent raw materials. Preferred deposition aids are selected from the group consisting of cationic and nonionic polymers. Suitable polymers include cationic starches, cationic hydroxyethylcellulose, polyvinylformaldehyde, locust bean gum, mannans, xyloglucans, tamarind gum, polyethyleneterephthalate and polymers containing dimethylaminoethyl methacrylate, optionally with one or more monomers selected from the group comprising acrylic acid and acrylamide.

*Additional Amines*

Polyamines are known to improve grease removal. Preferred cyclic and linear amines for performance are 1,3-bis (methylamine)-cyclohexane, 4-methylcyclohexane-1,3-diamine (Baxxodur ECX 210 supplied by BASF) 1,3 propane diamine, 1,6 hexane diamine,1,3 pentane diamine (Dytek EP supplied by Invista), 2-methyl 1,5 pentane diamine (Dytek A supplied by Invista). US6710023 discloses hand dishwashing compositions containing said diamines and polyamines containing at least 3 protonable amines. Polyamines according to the invention have at least one pka above the wash pH and at least two pka's greater than 6 and below the wash pH. Preferred polyamines with are selected from the group consisting of tetraethylenepentamine, hexaethylhexamine, heptaethylheptamines, octaethyloctamines, nonethylnonamines, and mixtures thereof commercially available from Dow, BASF and Huntman. Especially preferred polyetheramines are lipophilic modified as described in US9752101, US9487739, US 9631163

*Dye Transfer Inhibitor (DTI)*

The composition may comprise one or more dye transfer inhibiting agents. In one embodiment of the invention the inventors have surprisingly found that compositions comprising polymeric dye transfer inhibiting agents in addition to the specified dye give improved performance. This is surprising because these polymers prevent dye deposition. Suitable dye transfer inhibitors include, but are not limited to, polyvinylpyrrolidone polymers, polyamine N-oxide polymers, copolymers of N-vinylpyrrolidone and N-vinylimidazole, polyvinyloxazolidones and polyvinylimidazoles or mixtures thereof. Suitable examples include PVP-K15, PVP-K30, ChromaBond S-400, ChromaBond S-403E and Chromabond S-100 from Ashland Aqualon, and Sokalan HP165, Sokalan HP50, Sokalan HP53, Sokalan HP59, Sokalan® HP 56K, Sokalan® HP 66 from BASF. Other suitable DTIs are as described in WO2012/004134. When present in a subject composition, the dye transfer inhibiting agents may be present at levels from 0.0001% to 10%, from 0.01% to 5% or even from 0.1% to 3% by weight of the composition.

*Enzymes*

Enzymes may be included in the cleaning compositions for a variety of purposes, including removal of protein-based, carbohydrate-based, or triglyceride-based stains from substrates, for the prevention of refugee dye transfer in fabric laundering, and for fabric restoration. Suitable enzymes include proteases, amylases, lipases, carbohydrases, cellulases, oxidases, peroxidases, mannanases, and mixtures thereof of any suitable origin, such as vegetable, animal, bacterial, fungal, and yeast origin. Other enzymes that may be used in the cleaning compositions described herein include hemicellulases, peroxidases, proteases, cellulases, endoglucanases, xylanases, lipases, phospholipases, amylases, gluco-amylases, xylanases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidases, chondroitinases, laccases, or mixtures thereof., esterases, mannanases, pectate lyases, and or mixtures thereof. Other suitable enzymes include Nuclease enzyme. The composition may comprise a nuclease enzyme. The nuclease enzyme is an enzyme capable of cleaving the phosphodiester bonds between the nucleotide sub-units of nucleic acids. The nuclease enzyme herein is preferably a deoxyribonuclease or ribonuclease enzyme or a functional fragment thereof. Enzyme selection is influenced by factors such as pH-activity and/or stability optima, thermostability, and stability to active detergents, builders.

The enzymes may be incorporated into the cleaning composition at levels from 0.0001% to 5% of active enzyme by weight of the cleaning composition. The enzymes can be added as a separate single ingredient or as mixtures of two or more enzymes.

In some embodiments, lipase may be used. Lipase may be purchased under the trade name Lipex from Novozymes (Denmark). Amylases (Natalase®, Stainzyme®, Stainzyme Plus®) may be supplied by Novozymes, Bagsvaerd, Denmark. Proteases may be supplied by Genencor International, Palo Alto, Calif., USA (e.g. Purafect Prime®) or by Novozymes, Bagsvaerd, Denmark (e.g. Liquanase®, Coronase®, Savinase®). Other preferred enzymes include pectate lyases preferably those sold under the trade names Pectawash®, Xpect®, Pectaway® and the mannanases sold under the trade names Mannaway® (all from Novozymes A/S, Bagsvaerd, Denmark), and Purabrite® (Genencor International Inc., Palo Alto, California). A range of enzyme materials and means for their incorporation into synthetic cleaning compositions is disclosed in WO 9307263 A; WO 9307260 A; WO 8908694 A; U.S. Pat. Nos. 3,553,139; 4,101,457; and U.S. Pat. No. 4,507,219. Enzyme materials useful for liquid cleaning compositions, and their incorporation into such compositions, are disclosed in U.S. Pat. No. 4,261,868.

*Enzyme Stabilizing System*

The enzyme-containing compositions described herein may optionally comprise from 0.001% to 10%, in some examples from 0.005% to 8%, and in other examples, from 0.01% to 6%, by weight of the composition, of an enzyme stabilizing system. The enzyme stabilizing system can be any stabilizing system which is compatible with the detersive enzyme. Such a system may be inherently provided by other formulation actives, or be added separately, e.g., by the formulator or by a manufacturer of detergent-ready enzymes. Such stabilizing systems can, for example, comprise calcium ion, boric acid, propylene glycol, short chain carboxylic acids, boronic acids, chlorine bleach scavengers and mixtures thereof, and are designed to address different stabilization problems depending on the type and physical form of the cleaning composition. See U.S. Pat. No. 4,537,706 for a review of borate stabilizers.

*Chelating Agent.*

Preferably the composition comprises chelating agents and/or crystal growth inhibitor. Suitable molecules include copper, iron and/or manganese chelating agents and mixtures thereof. Suitable molecules include aminocarboxylates, aminophosphonates, succinates, salts thereof, and mixtures thereof. Non-limiting examples of suitable chelants for use herein include ethylenediaminetetracetates, N-(hydroxyethyl)-ethylene-diamine-triacetates, nitrilotriacetates, ethylenediamine tetraproprionates, triethylene-tetraamine-hexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), and 1,2-diydroxybenzene-3,5-disulfonic acid (Tiron), salts thereof, and mixtures thereof. Tiron as well as other sulphonated catechols may also be used as effective heavy metal chelants. Other non-limiting examples of chelants of use in the present invention are found in U.S. Patent Nos. 7445644, 7585376 and 2009/0176684A1. Other suitable chelating agents for use herein are the commercial DEQUEST series, and chelants from Monsanto, DuPont, and Nalco Inc.

*Brighteners*

Optical brighteners or other brightening or whitening agents may be incorporated at levels of from 0.01% to 1.2%, by weight of the composition, into the cleaning compositions described herein. Commercial optical brighteners, which may be used herein, can be classified into subgroups, which include, but are not necessarily limited to, derivatives of stilbene, pyrazoline, coumarin, carboxylic acid, methinecyanines, dibenzothiphene-5,5-dioxide, azoles, 5- and 6-membered-ring heterocycles, and other miscellaneous agents. Examples of such brighteners are disclosed in "The Production and Application of Fluorescent Brightening Agents," M. Zahradnik, John Wiley & Sons, New York (1982). Specific, non-limiting examples of optical brighteners which may be useful in the present compositions are those identified in U.S. Pat. No. 4,790,856 and U.S. Pat. No. 3,646,015. Highly preferred Brighteners include Disodium 4,4'-bis{[4-anilino-6-[bis(2-hydroxyethyl)amino-s-triazin-2-yl]-amino}-2,2'-stilbenedisulfonate, 4,4'-bis{[4-anilino-6-morpholino-s-triazin-2-yl]-amino}-2,2'-stilbenedisulfonate, Disodium 4,4"-bis[(4,6-di-anilino-s-triazin-2-yl)-amino]-2,2'-stilbenedisulfonate and disodium 4,4'-bis-(2-sulfostyryl)biphenyl.

*Bleaching Agents.*

It may be preferred for the composition to comprise one or more bleaching agents. Suitable bleaching agents include photobleaches, hydrogen peroxide, sources of hydrogen peroxide, pre-formed peracids and mixtures thereof.

(1) photobleaches for example sulfonated zinc phthalocyanine sulfonated aluminium phthalocyanines, xanthene dyes and mixtures thereof;
(2) pre-formed peracids: Suitable preformed peracids include, but are not limited to compounds selected from the group consisting of pre-formed peroxyacids or salts thereof typically a percarboxylic acids and salts, percarbonic acids and salts, perimidic acids and salts, peroxymonosulfuric acids and salts, for example, Oxone ®, and mixtures thereof. Suitable examples include peroxycarboxylic acids or salts thereof, or peroxysulphonic acids or salts thereof. Particularly preferred peroxyacids are phthalimido-peroxy-alkanoic acids, in particular ε-phthalimido peroxy hexanoic acid (PAP). Preferably, the peroxyacid or salt thereof has a melting point in the range of from 30oC to 60oC.
(3) sources of hydrogen peroxide, for example, inorganic perhydrate salts, including alkali metal salts such as sodium salts of perborate (usually mono- or tetra-hydrate), percarbonate, persulphate, perphosphate, persilicate salts and mixtures thereof.

Fabric Shading Dyes

The fabric shading dye (sometimes referred to as hueing, bluing or whitening agents) typically provides a blue or violet shade to fabric. Such dye(s) are well known in the art and may be used either alone or in combination to create a specific shade of hueing and/or to shade different fabric types. The fabric shading dye may be selected from any chemical class of dye as known in the art, including but not limited to acridine, anthraquinone (including polycyclic quinones), azine, azo (e.g., monoazo, disazo, trisazo, tetrakisazo, polyazo), benzodifurane, benzodifuranone, carotenoid, coumarin, cyanine, diazahemicyanine, diphenylmethane, formazan, hemicyanine, indigoids, methane, naphthalimides, naphthoquinone, nitro, nitroso, oxazine, phthalocyanine, pyrazoles, stilbene, styryl, triarylmethane, triphenylmethane, xanthenes and mixtures thereof. The amount of adjunct fabric shading dye present in a laundry care composition of the invention is typically from 0.0001 to 0.05 wt% based on the total cleaning composition, preferably from 0.0001 to 0.005 wt%. Based on the wash liquor, the concentration of fabric shading dye typically is from 1 ppb to 5 ppm, preferably from 10 ppb to 500 ppb.

Suitable fabric shading dyes include small molecule dyes, polymeric dyes and dye-clay conjugates. Preferred fabric shading dyes are selected from small molecule dyes and polymeric dyes. Suitable small molecule dyes may be selected from the group consisting of dyes falling into the Colour Index (C.I., Society of Dyers and Colourists, Bradford, UK) classifications of Acid, Direct, Basic, Reactive, Solvent or Disperse dyes.

Suitable polymeric dyes include dyes selected from the group consisting of polymers containing covalently bound (sometimes referred to as conjugated) chromogens, (also known as dye-polymer conjugates), for example polymers with chromogen monomers co-polymerized into the backbone of the polymer and mixtures thereof. Preferred polymeric dyes comprise the optionally substituted alkoxylated dyes, such as alkoxylated triphenyl-methane polymeric colourants, alkoxylated carbocyclic and alkoxylated heterocyclic azo colourants including alkoxylated thiophene polymeric colourants, and mixtures thereof, such as the fabric-substantive colorants sold under the name of Liquitint® (Milliken, Spartanburg, South Carolina, USA).

Suitable dye clay conjugates include dye clay conjugates selected from the group comprising at least one cationic/basic dye and a smectite clay; a preferred clay may be selected from the group consisting of Montmorillonite clay, Hectorite clay, Saponite clay and mixtures thereof.

Pigments are well known in the art and may also be used in the laundry care compositions herein._Suitable pigments include C.I Pigment Blues 15 to 20, especially 15 and/or 16, C.I. Pigment Blue 29, C.I. Pigment Violet 15, Monastral Blue and mixtures thereof.

*Builders*

The cleaning compositions of the present invention may optionally comprise a builder. Builders selected from aluminosilicates and silicates assist in controlling mineral hardness in wash water, or to assist in the removal of particulate soils from surfaces. Suitable builders may be selected from the group consisting of phosphates polyphosphates, especially sodium salts thereof; carbonates, bicarbonates, sesquicarbonates, and carbonate minerals other than sodium carbonate or sesquicarbonate; organic mono-, di-, tri-, and tetracarboxylates, especially water-soluble non-surfactant carboxylates in acid, sodium, potassium or alkanolammonium salt form, as well as oligomeric or water-soluble low molecular weight polymer carboxylates including aliphatic and aromatic types; and phytic acid. These may be complemented by borates, e.g., for pH-buffering purposes, or by sulfates, especially sodium sulfate and any other fillers or carriers which may be important to the engineering of stable surfactant and/or builder-containing cleaning compositions.

*pH Buffer System*

The compositions may also include a pH buffer system. The cleaning compositions herein may be formulated such that, during use in aqueous cleaning operations, the wash water will have a pH of between 6.0 and 12, and in some examples, between 7.0 and 11. Techniques for controlling pH at recommended usage levels include the use of buffers, alkalis, or acids, and are well known to those skilled in the art. These include, but are not limited to, the use of sodium carbonate, citric acid or sodium citrate, monoethanol amine or other amines, boric acid or borates, and other pH-adjusting compounds well known in the art. The cleaning compositions herein may comprise dynamic in-wash pH profiles by delaying the release of citric acid.

*Structurant / Thickeners*

Structured liquids can either be internally structured, whereby the structure is formed by primary ingredients (e.g. surfactant material) and/or externally structured by providing a three dimensional matrix structure using secondary ingredients (e.g. polymers, clay and/or silicate material). The composition may comprise from 0.01% to 5%, by weight of the composition, of a structurant, and in some examples, from 0.1% to 2.0%, by weight of the composition, of a structurant. The structurant may be selected from the group consisting of diglycerides and triglycerides, ethylene glycol distearate, microcrystalline cellulose, cellulose-based materials, microfiber cellulose, biopolymers, xanthan gum, gellan gum, and mixtures thereof. In some examples, a suitable structurant includes hydrogenated castor oil, and non-ethoxylated derivatives thereof. Other suitable structurants are disclosed in US Patent No. 6,855,680. Such structurants have a thread-like structuring system having a range of aspect ratios. Further suitable structurants and the processes for making them are described in WO 2010/034736.

*Suds Suppressors*

Compounds for reducing or suppressing the formation of suds can be incorporated into the cleaning compositions described herein. Suds suppression can be of particular importance in the so-called "high concentration cleaning process" as described in U.S. Pat. No. 4,489,455,4,489,574, and in front-loading style washing machines.

A wide variety of materials may be used as suds suppressors, and suds suppressors are well known to those skilled in the art. See, for example, Kirk Othmer Encyclopedia of Chemical Technology, Third Edition, Volume 7, pages 430-447 (John Wiley & Sons, Inc., 1979). Examples of suds suppressors include monocarboxylic fatty acid, and soluble salts therein, high molecular weight hydrocarbons such as paraffin, fatty acid esters (e.g., fatty acid triglycerides), fatty acid esters of monovalent alcohols, aliphatic C18-C40 ketones (e.g., stearone), N-alkylated amino triazines, waxy hydrocarbons preferably having a melting point below 100 °C, silicone suds suppressors, and secondary alcohols. Suds suppressors are described in U.S. Pat. Nos. 2,954,347; 4,075,118; 4,265,779; 4,265,779; 3,455,839; 3,933,672; 4,652,392; 4,978,471; 4,983,316; 5,288,431; 4,639,489; 4,749,740; and 4,798,679.

The cleaning compositions herein may comprise from 0% to 10%, by weight of the composition, of suds suppressor. When utilized as suds suppressors, monocarboxylic fatty acids, and salts thereof, may be present in amounts up to 5% by weight of the cleaning composition, and in some examples, may be from 0.5% to 3% by weight of the cleaning composition. Silicone suds suppressors may be utilized in amounts up to 2.0% by weight of the cleaning composition, although higher amounts may be used. Monostearyl phosphate suds suppressors may be utilized in amounts ranging from 0.1% to 2% by weight of the cleaning composition. Hydrocarbon suds suppressors may be utilized in

amounts ranging from 0.01% to 5.0% by weight of the cleaning composition, although higher levels can be used. Alcohol suds suppressors may be used at 0.2% to 3% by weight of the cleaning composition.

*Suds Boosters*

If high sudsing is desired, suds boosters such as the C10-C16 alkanolamides may be incorporated into the cleaning compositions from 1% to 10% by weight of the cleaning composition. Some examples include the C10-C14 monoethanol and diethanol amides. If desired, water-soluble magnesium and/or calcium salts such as $MgCl_2$, $MgSO_4$, $CaCl_2$, $CaSO_4$, may be added at levels of 0.1% to 2% by weight of the cleaning composition, to provide additional suds and to enhance grease removal performance.

*Fillers and Carriers*

Fillers and carriers may be used in the cleaning compositions described herein. As used herein, the terms "filler" and "carrier" have the same meaning and can be used interchangeably. Liquid cleaning compositions, and other forms of cleaning compositions that include a liquid component (such as liquid-containing unit dose cleaning compositions), may contain water and other solvents as fillers or carriers. Low molecular weight primary or secondary alcohols exemplified by methanol, ethanol, propanol, isopropanol, and phenoxyethanol are suitable. Monohydric alcohols may be used in some examples for solubilizing surfactants, and polyols such as those containing from 2 to 6 carbon atoms and from 2 to 6 hydroxy groups (e.g., 1,2-propanediol, 1,3-propanediol, 2,3-butanediol, ethylene glycol, and glycerine may be used). Amine-containing solvents may also be used.

*Methods of Use*

The present invention includes methods for whitening fabric. Compact fluid detergent compositions that are suitable for sale to consumers are suited for use in laundry pretreatment applications, laundry cleaning applications, and home care applications. Such methods include, but are not limited to, the steps of contacting detergent compositions in neat form or diluted in wash liquor, with at least a portion of a fabric which may or may not be soiled and then optionally rinsing the fabric. The fabric material may be subjected to a washing step prior to the optional rinsing step. Machine laundry methods may comprise treating soiled laundry with an aqueous wash solution in a washing machine having dissolved or dispensed therein an effective amount of a machine laundry detergent composition in accord with the invention. An "effective amount" of the detergent composition means from 20 g to 300g of product dissolved or dispersed in a wash solution of volume from 5L to 65L. The water temperatures may range from 5° C. to 100° C. The water to soiled material (e.g., fabric) ratio may be from 1:1 to 30:1. The compositions may be employed at concentrations of from 500 ppm to 15,000 ppm in solution. In the context of a fabric laundry composition, usage levels may also vary depending not only on the type and severity of the soils and stains, but also on the wash water temperature, the volume of wash water, and the type of washing machine (e.g., top-loading, front-loading, vertical-axis Japanese-type automatic washing machine).

The detergent compositions herein may be used for laundering of fabrics at reduced wash temperatures. These methods of laundering fabric comprise the steps of delivering a laundry detergent composition to water to form a wash liquor and adding a laundering fabric to said wash liquor, wherein the wash liquor has a temperature of from 0 °C to 20° C, or from 0° C to 15° C, or from 0° C to 9° C. The fabric may be contacted to the water prior to, or after, or simultaneous with, contacting the laundry detergent composition with water. Another method includes contacting a nonwoven substrate, which is impregnated with the detergent composition, with a soiled material. As used herein, "nonwoven substrate" can comprise any conventionally fashioned nonwoven sheet or web having suitable basis weight, caliper (thickness), absorbency, and strength characteristics. Non-limiting examples of suitable commercially available nonwoven substrates include those marketed under the trade names SONTARA® by DuPont and POLY WEB® by James River Corp. Hand washing/soak methods, and combined hand washing with semi-automatic washing machines, are also included.

*Packaging for the Compositions*

The cleaning compositions described herein can be packaged in any suitable container including those constructed from paper, cardboard, plastic materials, and any suitable laminates. An optional packaging type is described in European Application No. 94921505.7.

*Multi-Compartment Pouch*

The cleaning compositions described herein may also be packaged as a multi-compartment cleaning composition.

*Other Adjunct Ingredients*

A wide variety of other ingredients may be used in the cleaning compositions herein, including, for example, other active ingredients, carriers, processing aids, dyes or pigments, solvents for liquid formulations, solid or other liquid fillers, erythrosine, colliodal silica, waxes, probiotics, surfactin, aminocellulosic polymers, Zinc Ricinoleate, perfume microcapsules, rhamnolipds, sophorolipids, glycopeptides, methyl ester ethoxylates, sulfonated estolides, cleavable surfactants, biopolymers, silicones, modified silicones, aminosilicones, deposition aids, hydrotropes (especially cumene-sulfonate salts, toluene-sulfonate salts, xylene-sulfonate salts, and naphalene salts), PVA particle-encapsulated dyes or perfumes, pearlescent agents, effervescent agents, color change systems, silicone polyurethanes, opacifiers, tablet disintegrants, biomass fillers, fast-dry silicones, glycol distearate, starch perfume encapsulates, emulsified oils including hydrocarbon oils, polyolefins, and fatty esters, bisphenol antioxidants, micro-fibrous cellulose structurants, properfumes, styrene/acrylate polymers, triazines, soaps, superoxide dismutase, benzophenone protease inhibitors, functionalized TiO2, dibutyl phosphate, silica perfume capsules, and other adjunct ingredients, choline oxidase, triarylmethane blue and violet basic dyes, methine blue and violet basic dyes, anthraquinone blue and violet basic dyes, azo dyes basic blue 16, basic blue 65, basic blue 66 basic blue 67, basic blue 71, basic blue 159, basic violet 19, basic violet 35, basic violet 38, basic violet 48, oxazine dyes, basic blue 3, basic blue 75, basic blue 95, basic blue 122, basic blue 124, basic blue 141, Nile blue A and xanthene dye basic violet 10, an alkoxylated triphenylmethane polymeric colorant; an alkoxylated thiopene polymeric colorant; thiazolium dye, mica, titanium dioxide coated mica, bismuth oxychloride, and other actives.

Anti-oxidant: The composition may optionally contain an anti-oxidant present in the composition from 0.001 to 2% by weight. Preferably the antioxidant is present at a concentration in the range 0.01 to 0.08% by weight. Mixtures of anti-oxidants may be used.

One class of anti-oxidants used in the present invention is alkylated phenols. Hindered phenolic compounds are a preferred type of alkylated phenols having this formula. A preferred hindered phenolic compound of this type is 3,5-di-tert-butyl-4-hydroxytoluene (BHT).

Furthermore, the anti-oxidant used in the composition may be selected from the group consisting of α-, β-, γ-, δ--tocopherol, ethoxyquin, 2,2,4-trimethyl-1,2-dihydroquinoline, 2,6-di-tert-butyl hydroquinone, tert-butyl hydroxyanisole, lignosulphonic acid and salts thereof, and mixtures thereof.

The cleaning compositions described herein may also contain vitamins and amino acids such as: water soluble vitamins and their derivatives, water soluble amino acids and their salts and/or derivatives, water insoluble amino acids viscosity modifiers, dyes, nonvolatile solvents or diluents (water soluble and insoluble), pearlescent aids, pediculocides, pH adjusting agents, preservatives, skin active agents, sunscreens, UV absorbers, niacinamide, caffeine, and minoxidil.

The cleaning compositions of the present invention may also contain pigment materials such as nitroso, monoazo, disazo, carotenoid, triphenyl methane, triaryl methane, xanthene, quinoline, oxazine, azine, anthraquinone, indigoid, thionindigoid, quinacridone, phthalocianine, botanical, and natural colors, including water soluble components such as those having C.I. Names.

The cleaning compositions of the present invention may also contain antimicrobial agents. Cationic active ingredients may include but are not limited to n-alkyl dimethyl benzyl ammonium chloride, alkyl dimethyl ethyl benzyl ammonium chloride, dialkyl dimethyl quaternary ammonium compounds such as didecyl dimethyl ammonium chloride, N,N-didecyl-Nmethyl-poly(oxyethyl) ammonium propionate, dioctyl didecyl ammonium chloride, also including quaternary species such as benzethonium chloride and quaternary ammonium compounds with inorganic or organic counter ions such as bromine, carbonate or other moieties including dialkyl dimethyl ammonium carbonates, as well as antimicrobial amines such as Chlorhexidine Gluconate, PHMB (Polyhexamethylene biguanide), salt of a biguanide, a substituted biguanide derivative, an organic salt of a quaternary ammonium containing compound or an inorganic salt of a quaternary ammonium containing compound or mixtures thereof.

In one aspect, such method comprises the steps of optionally washing and/or rinsing said surface or fabric, contacting said surface or fabric with any composition disclosed in this specification then optionally washing and/or rinsing said surface or fabric is disclosed, with an optional drying step.

Drying of such surfaces or fabrics may be accomplished by any one of the common means employed either in domestic or industrial settings. The fabric may comprise any fabric capable of being laundered in normal consumer or institutional use conditions, and the invention is suitable for cellulosic substrates and in some aspects also suitable for synthetic textiles such as polyester and nylon and for treatment of mixed fabrics and/or fibers comprising synthetic and cellulosic fabrics and/or fibers. As examples of synthetic fabrics are polyester, nylon, these may be present in mixtures with cellulosic fibers, for example, polycotton fabrics. The solution typically has a pH of from 7 to 11, more usually 8 to 10.5. The compositions are typically employed at concentrations from 500 ppm to 5,000 ppm in solution. The water temperatures typically range from 5°C to 90°C. The water to fabric ratio is typically from 1:1 to 30:1.

In a fifth embodiment, the invention provides a domestic method of treating a textile material, the method

comprising the steps of (a) treating the textile material with an aqueous solution of the leuco polymer, (b) optionally, rinsing the textile material, and (c) optionally, drying the textile material.

The leuco polymer used in the domestic treatment method can be any of the leuco polymers described above in connection with the earlier embodiments of the invention. The leuco polymer can be present in the aqueous solution in any suitable amount. In one aspect, the aqueous solution comprises from 10 ppb to 5,000 ppm, preferably 50 ppb to 2 ppm, of the leuco polymer. In such an embodiment, the aqueous solution can further comprise a surfactant in an amount of from 0.0 g/L to 6 g/L, preferably 0.2 g/L to 4 g/L. Further, the aqueous solution utilized in the domestic treatment method can be prepared by combining any of the laundry care compositions described above with a suitable amount of water. The domestic treatment method can be performed in any suitable apparatus, such as a sink or a domestic clothes washing machine.

The following examples further illustrate the subject matter described above but, of course, should not be construed as in any way limiting the scope thereof.

**Examples**

Preparation of Leuco Monomers

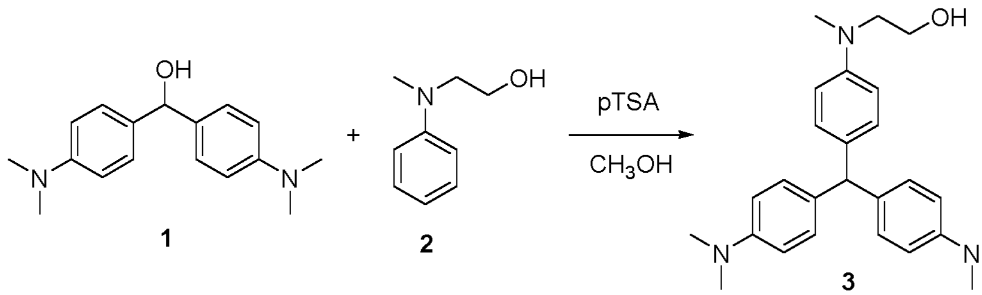


Leuco alcohol **3**: A solution of 4,40-bis(dimethylamino)benzhydrol (**1**) (0.27 g, 1.0 mmol), 2-(methylphenylamino)ethanol (**2**) (0.18 g, 1.2 mmol), and p-toluenesulfonic acid (pTSA) monohydrate (0.76 g, 4 mmol) in methanol (25 mL) is stirred at reflux with a Dean-Stark trap for 9 h. The mixture is diluted with methylene chloride and washed three times with aq. sodium bicarbonate. The organic layer is dried over anhydrous $MgSO_4$ and filtered. The filtrate is concentrated in vacuo to give a residue which is purified by column chromatography on silica gel (1:1 ethyl acetate/hexane) to yield the leuco alcohol intermediate **3.**

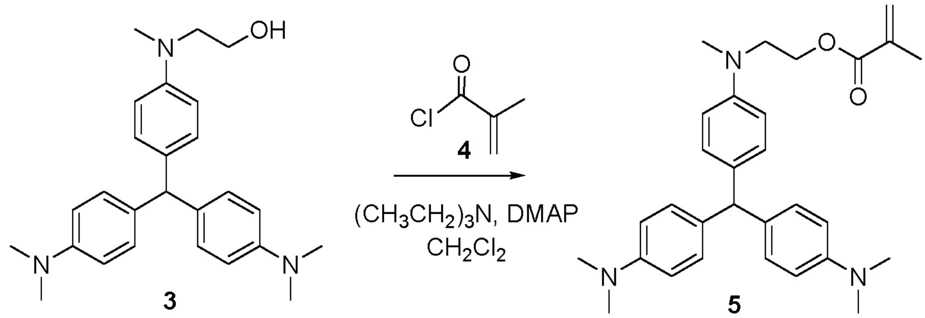


Leuco Monomer **5**: To a solution of intermediate **3** (0.12 g, 0.3 mmol) in methylene chloride (30 mL) is added triethylamine (0.3 g, 3 mmol), and dimethylaminopyridine (0.011 g, 0.09 mmol). The mixture is stirred at 0 °C for 10 min under $N_2$ atmosphere and methacryloyl chloride (**4**) (0.094 g, 0.9 mmol) is then added dropwise. The resultant mixture is stirred at ambient temperature for 24 h, after which it is concentrated in vacuo. The residue is purified by column chromatography on silica gel (2:3 ethyl acetate/hexane) to give the desired leuco monomer **5.**

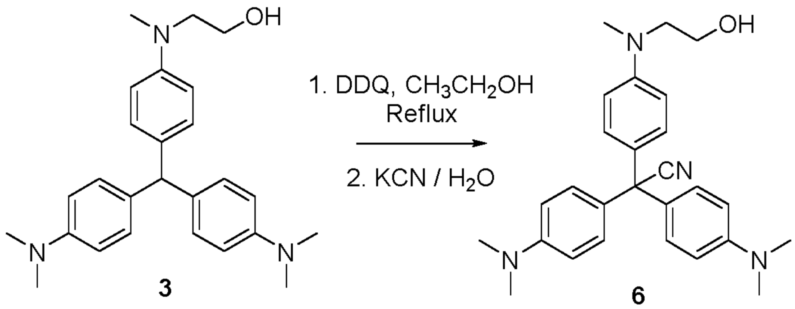


**3** **6**

CN-Substituted leuco alcohol **6**: To a solution containing the aminoalcohol **3** (0.04 g, 0.1 mmol)in ethanol (0.1M) is added 2,3-dichloro-5,6-dicyano-p-benzoquinone (DDQ, 0.34 g, 0.15 mmol). The mixture is stirred at reflux for 5 h. After the mixture is removed from the heat source, potassium cyanide (0.13 g, 2 mmol), dissolved in a minimum amount of water, is added. The mixture is stirred for 6 h, extracted four times with aq. sodium bicarbonate and washed with saturated aq. sodium chloride. The organic layer is collected and dried over anhydrous $MgSO_4$. After filtration, the filtrate is concentrated to give a residue which is purified by column chromatography on silica gel (2:3 ethyl acetate/hexane) to give the desired product **6.**

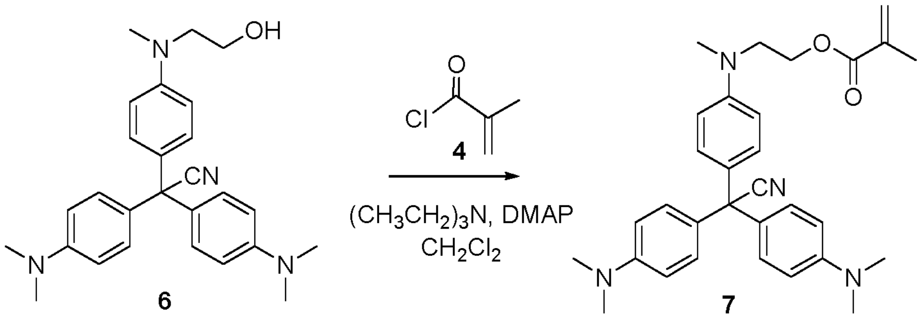


**6** **7**

CN-Substituted leuco monomer **7:** To a solution of intermediate **6** (0.03 g, 0.07 mmol) in methylene chloride (15 mL) is added triethylamine (0.07 g, 0.7 mmol), and dimethylaminopyridine (2.6 mg, 0.022 mmol). To this solution is added dropwise methacryloyl chloride (**4**) (0.022 g, 0.21 mmol) and the resultant mixture is stirred at room temperature for 24 h. Concentration in vacuo followed by purification via column chromatography on silica gel (in 1:1 ethyl acetate/hexane) gives the leuco monomer **7.**

Preparation of Leuco polymers

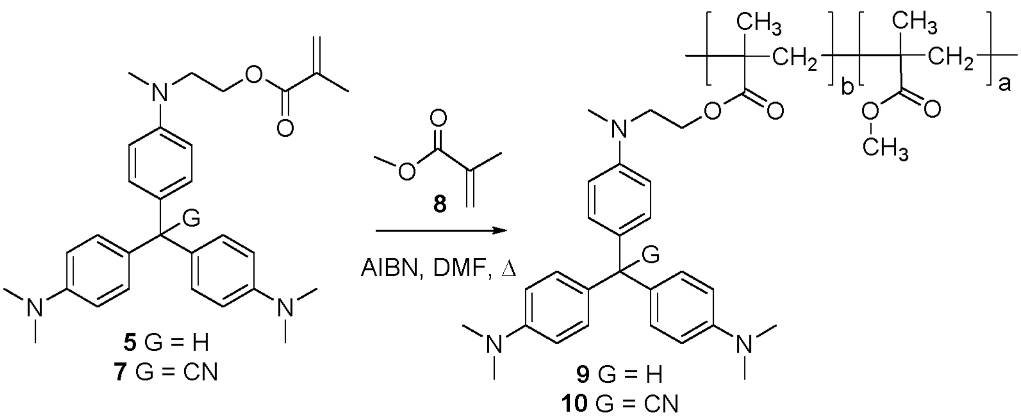


**5** G = H
**7** G = CN

**9** G = H
**10** G = CN

Leuco Polymer **9:** A solution containing the monomer **5** (0.28 g, 0.6 mmol), methyl methacrylate **8** (MMA, 0.30 g, 3 mmol), 2,2-azobis(isobutyronitrile) (AIBN; 0.006 g, 0.036 mmol), and DMF (2 mL) in an ampoule is subjected to

repeated freeze-thaw cycles before the ampoule is sealed under vacuum condition. The sealed ampoule is heated at 70 °C for 18 h. The resultant solution is diluted 10-fold with THF and precipitated into excess hexane. The polymer precipitates are collected, washed with methanol and dried to give Polymer **9.**

Leuco Polymer **10**: A solution containing the monomer **7** (0.86 g, 1.73 mmol), MMA **8** (0.87 g, 8.65 mmol), AIBN (8.54 mg, 0.052 mmol), and 1,4-dioxane (6 mL) in an ampoule is subjected to repeated freeze-thaw cycles before the ampoule is sealed under vacuum condition. The sealed ampoule is heated at 80 °C for 24 h. After polymerization, the solution is diluted fivefold with 1,4-dioxane and precipitated into excess hexane. The precipitate is filtered, washed with methanol, and dried to give Polymer **10.**

**Test Methods**

Fabric swatches used in the test methods herein are obtained from Testfabrics, Inc. West Pittston, PA, and are 100% Cotton, Style 403 (cut to 2" x 2") and/or Style 464 (cut to 4" x 6"), and an unbrightened multifiber fabric, specifically Style 41 (5cm x 10cm).

All reflectance spectra and color measurements, including L*, a*, b*, K/S, and Whiteness Index (WI CIE) values on dry fabric swatches, are made using one of four spectrophotometers: (1) a Konica-Minolta 3610d reflectance spectrophotometer (Konica Minolta Sensing Americas, Inc., Ramsey, NJ, USA; D65 illumination, 10° observer, UV light excluded), (2) a LabScan XE reflectance spectrophotometer (HunterLabs, Reston, VA; D65 illumination, 10° observer, UV light excluded), (3) a Color-Eye® 7000A (GretagMacbeth, New Windsor, NY, USA; D65 light, UV excluded), or (4) a Color i7 spectrophotometer (X-rite, Inc., Grand Rapids, MI, USA; D65 light, UV excluded). Measurements are performed using two layers of fabric, obtained by stacking smaller internal replicates (e.g., 2" x 2" Style 403) or folding of larger fabric swatches (e.g., 4" x 6" style 464).

Where fabrics are irradiated, unless otherwise indicated, the specified fabrics post-dry are exposed to simulated sunlight with irradiance of 0.77 $W/m^2$ @ 420 nm in an Atlas Xenon Fade-Ometer Ci3000+ (Atlas Material Testing Technology, Mount Prospect, Illinois, USA) equipped with Type S Borosilicate inner (Part no. 20277300) and outer (Part no. 20279600) filters, set at 37 °C maximum cabinet temperature, 57 °C maximum black panel temperature (BPT black panel geometry), and 35% RH (relative humidity). Unless otherwise indicated, irradiation is continuous over the stated duration.

**I. Method for Determining Leuco Compound Efficiency from a Wash Solution**

Cotton swatches (Style 403) are stripped prior to use by washing at 49°C two times with heavy duty liquid laundry detergent nil brightener (1.55 g/L in aqueous solution). A concentrated stock solution of each leuco compound to be tested is prepared in a solvent selected from ethanol or 50:50 ethanol:water, preferably ethanol.

A base wash solution is prepared by dissolving heavy duty liquid laundry detergent nil brightener (5.23 g/1.0 L) in deionized water. Four stripped cotton swatches are weighed together and placed in a 250mL Erlenmeyer flask along with two 10mm glass marbles. A total of three such flasks are prepared for each wash solution to be tested. The base wash solution is dosed with the leuco colorant stock to achieve a wash solution with the desired $2.0 \times 10^{-6}$ *N* wash concentration of the leuco colorant. (By way of example, a 1.0 ppm wash solution of a leuco colorant with equivalent weight of 493.65 g/equivalent, or a 1.5 ppm wash solution of a leuco colorant with equivalent weight of 757.97 g/equivalent, provides a wash solution that is $2.0 \times 10^{-6}$ *N* leuco.)

An aliquot of this wash solution sufficient to provide a 10.0:1.0 liquor:fabric (w/w) ratio is placed into each of the three 250mL Erlenmeyer flasks. Each flask is dosed with a 1000 gpg stock hardness solution to achieve a final wash hardness of 6 gpg (3:1 Ca:Mg).

The flasks are placed on a Model 75 wrist action shaker (Burrell Scientific, Inc., Pittsburg, PA) and agitated at the maximum setting for 12 minutes, after which the wash solution is removed by aspiration, a volume of rinse water (0 gpg) equivalent to the amount of wash solution used is added. Each flask is dosed with a 1000 gpg stock hardness solution to achieve a final rinse hardness of 6 gpg (3:1 Ca:Mg) before agitating 4 more minutes. The rinse is removed by aspiration and the fabric swatches are spun dry (Mini Countertop Spin Dryer, The Laundry Alternative Inc., Nashua, NH) for 1 minute, then placed in a food dehydrator set at 57°C (135 °F) to dry in the dark for 2 hours.

A. Dark conditions post-dry

L*, a*, b* and Whiteness Index (WI CIE) values for the cotton fabrics are measured on the dry swatches 48 hours following the drying procedureusing a LabScan XE reflectance spectrophotometer. The L*, a*, and b* values of the 12 swatches generated for each leuco compound (three flasks with four swatches each) are averaged and the leuco compound efficiency (LCE) of each leuco compound is calculated using the following equation:

$$LCE = DE^* = [(L^*_c - L^*_s)^2 + (a^*_c - a^*_s)^2 + (b^*_c - b^*_s)^2]^{1/2}$$

wherein the subscripts c and s respectively refer to the control, i.e., the fabric washed in detergent with no leuco compound, and the sample, i.e., the fabric washed in detergent containing leuco compound.

The WI CIE values of the 12 swatches generated for each wash solution (three flasks with four swatches each) are averaged and the change in whiteness index on washing is calculated using the following equation:

$$\Delta WI = WI\ CIE\ (after\ wash) - WI\ CIE\ (before\ wash)$$

B. Light conditions post-dry

Because consumer habits vary greatly throughout the world, the methods used must allow for the possibility of measuring the benefits of leuco compounds across conditions. One such condition is the exposure to light following drying. Some leuco compounds will not exhibit as large a benefit under dark storage as under light storage, so each leuco compound must be tested under both sets of conditions to determine the optimum benefit. Therefore Method I includes exposure of the dried fabrics to simulated sunlight for various increments of time before measurements are taken, and the LCE value is set to the maximum value obtained from the set of exposure times described below.

The specified cotton fabrics post-dry are exposed to simulated sunlight for 15 min, 30 min, 45 min, 60 min, 75 min, 90 min, 120 min, and 240 min. The L*, a*, b*, and Whiteness Index (WI CIE) values for the cotton fabrics are measured on the swatches after each exposure period using a LabScan XE reflectance spectrophotometer. The calculation of the LCE and the ΔWI value at each exposure time point is as described in Method I.A. above, and the LCE value and the ΔWI value for the leuco compound are set to the maximum values obtained from the set of exposure times listed.

**II. Method for Determining Relative Hue Angle (vs. Nil Leuco Compound)**

The relative hue angle delivered by a leuco compound to cotton fabrics treated according to Method I described above is determined as follows.

a) The a* and b* values of the 12 swatches from each solution are averaged and the following formulas used to determine Δa* and Δb*:

$$\Delta a^* = a^*_c - a^*_s \qquad \text{and} \qquad \Delta b^* = b^*_c - b^*_s$$

wherein the subscripts c and s respectively refer to the fabric washed in detergent with no leuco compound and the fabric washed in detergent containing leuco compound.

b) If the absolute value of both Δa* and Δb* < 0.25, no Relative Hue Angle (RHA) is calculated. If the absolute value of either Δa* or Δb* is ≥ 0.25, the RHA is determined using one of the following formulas:

$$RHA = ATAN2(\Delta a^*,\Delta b^*)\ \text{for}\ \Delta b^* \geq 0$$

$$RHA = 360 + ATAN2(\Delta a^*,\Delta b^*)\ \text{for}\ \Delta b^* < 0$$

A relative hue angle can be calculated for each time point where data is collected in either the dark post-dry or light post-dry assessments. Any of these points may be used to satisfy the requirements of a claim.

**III. Method for Determining Change in Whiteness Index for a Laundry Care Formulation**

Cotton swatches (Style 403) are stripped prior to use by washing at 49°C two times with heavy duty liquid laundry detergent nil brightener (1.55 g/L in aqueous solution).

A base wash solution is prepared by dissolving the laundry care formulation (5.23 g/1.0 L) in deionized water. Four stripped cotton swatches are weighed together and placed in a 250mL Erlenmeyer flask along with two 10mm

glass marbles. A total of three such flasks are prepared.

An aliquot of this wash solution sufficient to provide a 10.0:1.0 liquor:fabric (w/w) ratio is placed into each of the three 250mL Erlenmeyer flasks. Each flask is dosed with a 1000 gpg stock hardness solution to achieve a final wash hardness of 6 gpg (3:1 Ca:Mg).

The flasks are placed on a Model 75 wrist action shaker (Burrell Scientific, Inc., Pittsburg, PA) and agitated at the maximum setting for 12 minutes, after which the wash solution is removed by aspiration, a volume of rinse water (0 gpg) equivalent to the amount of wash solution used is added. Each flask is dosed with a 1000 gpg stock hardness solution to achieve a final rinse hardness of 6 gpg (3:1 Ca:Mg) before agitating 4 more minutes. The rinse is removed by aspiration and the fabric swatches are spun dry (Mini Countertop Spin Dryer, The Laundry Alternative Inc., Nashua, NH) for 1 minute, then placed in a food dehydrator set at 57°C (135 °F) to dry in the dark for 2 hours.

L*, a*, b*, and Whiteness Index (WI CIE) values for the cotton fabrics are measured on the dry swatches, according to Method I.A. and/or I.B. above, using a LabScan XE reflectance spectrophotometer. The WI CIE values of the 12 swatches generated for the laundry care formulation (three flasks with four swatches each) are averaged and the change in whiteness index on washing is calculated using the following equation:

$$\Delta WI = WI\ CIE\ (after\ wash) - WI\ CIE\ (before\ wash)$$

**Formulation Examples**

The following are illustrative examples of cleaning compositions according to the present disclosure and are not intended to be limiting.

Examples 1-7: Heavy Duty Liquid laundry detergent compositions.

| Ingredients | 1 | 2 | 3 | 4 | 5 | 6 | 7 |
|---|---|---|---|---|---|---|---|
| | % weight | | | | | | |
| $AE_{1.8}S$ | 6.77 | 5.16 | 1.36 | 1.30 | - | - | - |
| $AE_3S$ | - | - | - | - | 0.45 | - | - |
| LAS | 0.86 | 2.06 | 2.72 | 0.68 | 0.95 | 1.56 | 3.55 |
| HSAS | 1.85 | 2.63 | 1.02 | - | - | - | - |
| AE9 | 6.32 | 9.85 | 10.20 | 7.92 | | | |
| AE8 | | | | | | | 35.45 |
| AE7 | | | | | 8.40 | 12.44 | |
| $C_{12-14}$ dimethyl Amine Oxide | 0.30 | 0.73 | 0.23 | 0.37 | - | - | - |
| $C_{12-18}$ Fatty Acid | 0.80 | 1.90 | 0.60 | 0.99 | 1.20 | - | 15.00 |
| Citric Acid | 2.50 | 3.96 | 1.88 | 1.98 | 0.90 | 2.50 | 0.60 |
| Optical Brightener 1 | 1.00 | 0.80 | 0.10 | 0.30 | 0.05 | 0.50 | 0.001 |
| Optical Brightener 3 | 0.001 | 0.05 | 0.01 | 0.20 | 0.50 | - | 1.00 |
| Sodium formate | 1.60 | 0.09 | 1.20 | 0.04 | 1.60 | 1.20 | 0.20 |
| DTI | 0.32 | 0.05 | - | 0.60 | - | 0.60 | 0.01 |
| Sodium hydroxide | 2.30 | 3.80 | 1.70 | 1.90 | 1.70 | 2.50 | 2.30 |
| Monoethanolamine | 1.40 | 1.49 | 1.00 | 0.70 | - | - | - |
| Diethylene glycol | 5.50 | - | 4.10 | - | - | - | - |
| Chelant 1 | 0.15 | 0.15 | 0.11 | 0.07 | 0.50 | 0.11 | 0.80 |
| 4-formyl-phenylboronic acid | - | - | - | - | 0.05 | 0.02 | 0.01 |

(continued)

| Ingredients | 1 | 2 | 3 | 4 | 5 | 6 | 7 |
|---|---|---|---|---|---|---|---|
| | % weight | | | | | | |
| Sodium tetraborate | 1.43 | 1.50 | 1.10 | 0.75 | - | 1.07 | - |
| Ethanol | 1.54 | 1.77 | 1.15 | 0.89 | - | 3.00 | 7.00 |
| Polymer 1 | 0.10 | - | - | - | - | - | 2.00 |
| Polymer 2 | 0.30 | 0.33 | 0.23 | 0.17 | - | - | - |
| Polymer 3 | - | - | - | - | - | - | 0.80 |
| Polymer 4 | 0.80 | 0.81 | 0.60 | 0.40 | 1.00 | 1.00 | - |
| 1,2-Propanediol | - | 6.60 | - | 3.30 | 0.50 | 2.00 | 8.00 |
| Structurant | 0.10 | - | - | - | - | - | 0.10 |
| Perfume | 1.60 | 1.10 | 1.00 | 0.80 | 0.90 | 1.50 | 1.60 |
| Perfume encapsulate | 0.10 | 0.05 | 0.01 | 0.02 | 0.10 | 0.05 | 0.10 |
| Protease | 0.80 | 0.60 | 0.70 | 0.90 | 0.70 | 0.60 | 1.50 |
| Mannanase | 0.07 | 0.05 | 0.045 | 0.06 | 0.04 | 0.045 | 0.10 |
| Amylase 1 | 0.30 | - | 0.30 | 0.10 | - | 0.40 | 0.10 |
| Amylase 2 | - | 0.20 | 0.10 | 0.15 | 0.07 | - | 0.10 |
| Xyloglucanase | 0.20 | 0.10 | - | - | 0.05 | 0.05 | 0.20 |
| Lipase | 0.40 | 0.20 | 0.30 | 0.10 | 0.20 | - | - |
| Polishing enzyme | - | 0.04 | - | - | - | 0.004 | - |
| Nuclease | 0.05 | - | - | - | - | - | 0.003 |
| Dispersin B | - | - | - | 0.05 | 0.03 | 0.001 | 0.001 |
| Liquitint® V200 | 0.01 | - | - | - | - | - | 0.005 |
| Leuco polymer | 0.5 | 0.35 | 0.1 | 0.2 | 0.04 | 0.02 | 0.04 |
| Dye control agent | - | 0.3 | - | 0.03 | - | 0.3 | 0.3 |
| Water, dyes & minors | Balance | | | | | | |
| pH | 8.2 | | | | | | |

Based on total cleaning and/or treatment composition weight. Enzyme levels are reported as raw material.

Examples 8 to 18: Unit Dose Compositions.

These examples provide various formulations for unit dose laundry detergents. Compositions 8 to 12 comprise a single unit dose compartment. The film used to encapsulate the compositions is polyvinyl-alcohol-based film.

| Ingredients | 8 | 9 | 10 | 11 | 12 |
|---|---|---|---|---|---|
| | % weight | | | | |
| LAS | 19.09 | 16.76 | 8.59 | 6.56 | 3.44 |
| AE3S | 1.91 | 0.74 | 0.18 | 0.46 | 0.07 |
| AE7 | 14.00 | 17.50 | 26.33 | 28.08 | 31.59 |
| Citric Acid | 0.6 | 0.6 | 0.6 | 0.6 | 0.6 |
| C12-15 Fatty Acid | 14.8 | 14.8 | 14.8 | 14.8 | 14.8 |

(continued)

| Ingredients | 8 | 9 | 10 | 11 | 12 |
|---|---|---|---|---|---|
| | % weight | | | | |
| Polymer 3 | 4.0 | 4.0 | 4.0 | 4.0 | 4.0 |
| Chelant 2 | 1.2 | 1.2 | 1.2 | 1.2 | 1.2 |
| Optical Brightener 1 | 0.20 | 0.25 | 0.01 | 0.01 | 0.50 |
| Optical Brightener 2 | 0.20 | - | 0.25 | 0.03 | 0.01 |
| Optical Brightener 3 | 0.18 | 0.09 | 0.30 | 0.01 | - |
| DTI | 0.10 | - | 0.20 | - | - |
| Glycerol | 6.1 | 6.1 | 6.1 | 6.1 | 6.1 |
| Monoethanol amine | 8.0 | 8.0 | 8.0 | 8.0 | 8.0 |
| Tri-isopropanol amine | - | - | 2.0 | - | - |
| Tri-ethanol amine | - | 2.0 | - | - | - |
| Cumene sulfonate | - | - | - | - | 2.0 |
| Protease | 0.80 | 0.60 | 0.07 | 1.00 | 1.50 |
| Mannanase | 0.07 | 0.05 | 0.05 | 0.10 | 0.01 |
| Amylase 1 | 0.20 | 0.11 | 0.30 | 0.50 | 0.05 |
| Amylase 2 | 0.11 | 0.20 | 0.10 | - | 0.50 |
| Polishing enzyme | 0.005 | 0.05 | - | - | - |
| Nuclease | 0.- | 0.05 | - | - | 0.005 |
| Dispersin B | 0.010 | 0.05 | 0.005 | 0.005 | - |
| Cyclohexyl dimethanol | - | - | - | 2.0 | - |
| Leuco polymer | 0.6 | 0.3 | 1.0 | 0.1 | 0.4 |
| Liquitint® V200 | - | - | 0.01 | 0.05 | - |
| Structurant | 0.14 | 0.14 | 0.14 | 0.14 | 0.14 |
| Perfume | 1.9 | 1.9 | 1.9 | 1.9 | 1.9 |
| Dye control agent | 0.1 | 0.3 | 0.2 | 0.5 | 0.3 |
| Water and miscellaneous | To 100% | | | | |
| pH | 7.5-8.2 | | | | |

Based on total cleaning and/or treatment composition weight. Enzyme levels are reported as raw material.

In the following examples the unit dose has three compartments, but similar compositions can be made with two, four or five compartments. The film used to encapsulate the compartments is polyvinyl alcohol.

| Base compositions Ingredients | 13 | 14 | 15 | 16 |
|---|---|---|---|---|
| | % weight | | | |
| HLAS | 26.82 | 16.35 | 7.50 | 3.34 |
| AE7 | 17.88 | 16.35 | 22.50 | 30.06 |
| Citric Acid | 0.5 | 0.7 | 0.6 | 0.5 |
| C12-15 Fatty acid | 16.4 | 6.0 | 11.0 | 13.0 |
| Polymer 1 | 2.9 | 0.1 | - | - |

(continued)

| **Base compositions Ingredients** | 13 | 14 | 15 | 16 |
|---|---|---|---|---|
| | % weight | | | |
| Polymer 3 | 1.1 | 5.1 | 2.5 | 4.2 |
| Cationic cellulose polymer | - | - | 0.3 | 0.5 |
| Polymer 6 | - | 1.5 | 0.3 | 0.2 |
| Chelant 2 | 1.1 | 2.0 | 0.6 | 1.5 |
| Optical Brightener 1 | 0.20 | 0.25 | 0.01 | 0.005 |
| Optical Brightener 3 | 0.18 | 0.05 | 0.30 | 0.005 |
| DTI | 0.1 | - | 0.05 | - |
| Glycerol | 5.3 | 5.0 | 5.0 | 4.2 |
| Monoethanolamine | 10.0 | 8.1 | 8.4 | 7.6 |
| Polyethylene glycol | - | - | 2.5 | 3.0 |
| Potassium sulfite | 0.2 | 0.2 | 0.5 | 0.7 |
| Protease | 0.80 | 0.60 | 0.40 | 0.80 |
| Amylase 1 | 0.20 | 0.20 | 0.200 | 0.30 |
| Polishing enzyme | - | - | 0.005 | 0.005 |
| Nuclease | 0.05 | - | - | - |
| Dispersin B | - | 0.010 | 0.010 | 0.010 |
| $MgCl_2$ | 0.2 | 0.2 | 0.1 | 0.3 |
| Structurant | 0.2 | 0.1 | 0.2 | 0.2 |
| Acid Violet 50 | 0.04 | 0.03 | 0.05 | 0.03 |
| Perfume / encapsulates | 0.10 | 0.30 | 0.01 | 0.05 |
| Dye control agent | 0.2 | 0.03 | 0.4 | - |
| Solvents and misc. | To 100% | | | |
| pH | 7.0-8.2 | | | |

| **Finishing compositions** | 17 | | | 18 | | |
|---|---|---|---|---|---|---|
| Compartment | A | B | C | A | B | C |
| Volume of each compartment | 40 ml | 5ml | 5 ml | 40 ml | 5 ml | 5 ml |

| **Ingredients** | Active material in Wt.% | | | | | |
|---|---|---|---|---|---|---|
| Perfume | 1.6 | 1.6 | 1.6 | 1.6 | 1.6 | 1.6 |
| Liquitint® V200 | 0 | 0.006 | 0 | 0 | 0.004 | - |
| Leuco polymer | | 0.2 | | 0.4 | - | - |
| TiO2 | - | - | 0.1 | - | | 0.1 |
| Sodium Sulfite | 0.4 | 0.4 | 0.4 | 0.1 | 0.3 | 0.3 |
| Polymer 5 | - | | | 2 | - | - |
| Hydrogenated castor oil | 0.14 | 0.14 | 0.14 | 0.14 | 0.14 | 0.14 |

(continued)

| Ingredients | Active material in Wt.% |
|---|---|
| Base Composition 13, 14, 15 or 16 | Add to 100% |

Based on total cleaning and/or treatment composition weight, enzyme levels are reported as raw material.

| | |
|---|---|
| AE1.8S | is $C_{12-15}$ alkyl ethoxy (1.8) sulfate |
| AE3S | is $C_{12-15}$ alkyl ethoxy (3) sulfate |
| AE7 | is $C_{12-13}$ alcohol ethoxylate, with an average degree of ethoxylation of 7 |
| AE8 | is $C_{12-13}$ alcohol ethoxylate, with an average degree of ethoxylation of 8 |
| AE9 | is $C_{12-13}$ alcohol ethoxylate, with an average degree of ethoxylation of 9 |
| Amylase 1 | is Stainzyme®, 15 mg active/g, supplied by Novozymes |
| Amylase 2 | is Natalase®, 29 mg active/g, supplied by Novozymes |
| Xyloglucanase | is Whitezyme®, 20mg active/g, supplied by Novozymes |
| Chelant 1 | is diethylene triamine pentaacetic acid |
| Chelant 2 | is 1-hydroxyethane 1,1-diphosphonic acid |
| Dispersin B | is a glycoside hydrolase, reported as 1000mg active/g |
| DTI | is either poly(4-vinylpyridine-1-oxide) (such as Chromabond S-403E®), or poly(1-vinylpyrrolidone-co-1-vinylimidazole) (such as Sokalan HP56®). |
| Dye control agent | Dye control agent in accordance with the invention, for example Suparex® O.IN (M1), Nylofixan® P (M2), Nylofixan® PM (M3), or Nylofixan® HF (M4) |
| HSAS | is mid-branched alkyl sulfate as disclosed in US 6,020,303 and US6,060,443 |
| LAS | is linear alkylbenzenesulfonate having an average aliphatic carbon chain length $C_9$-$C_{15}$ (HLAS is acid form). |
| Leuco colorant | Any suitable leuco colorant or mixtures thereof according to the instant invention. |
| Lipase | is Lipex®, 18 mg active/g, supplied by Novozymes |
| Liquitint® V200 | is a thiophene azo dye provided by Milliken |
| Mannanase | is Mannaway®, 25 mg active/g, supplied by Novozymes |
| Nuclease | is a Phosphodiesterase SEQ ID NO 1, reported as 1000mg active/g |
| Optical Brightener 1 | is disodium 4,4'-bis{[4-anilino-6-morpholino-s-triazin-2-yl]-amino}-2,2'-stilbenedisulfonate |
| Optical Brightener 2 | is disodium 4,4'-bis-(2-sulfostyryl)biphenyl (sodium salt) |
| Optical Brightener 3 | is Optiblanc SPL10® from 3V Sigma |
| Perfume encapsulate | is a core-shell melamine formaldehyde perfume microcapsules. |
| Polishing enzyme | is Para-nitrobenzyl esterase, reported as 1000mg active/g |
| Polymer 1 | is bis(($C_2H_5O$)($C_2H_4O$)n)($CH_3$)-$N^+$-$C_xH_{2x}$-$N^+$-($CH_3$)-bis(($C_2H_5O$)($C_2H_4O$)n), wherein n = 20-30,x = 3 to 8 or sulphated or sulfonated variants thereof |
| Polymer 2 | is ethoxylated ($EO_{15}$) tetraethylene pentamine |
| Polymer 3 | is ethoxylated polyethylenimine |
| Polymer 4 | is ethoxylated hexamethylene diamine |
| Polymer 5 | is Acusol 305, provided by Rohm&Haas |
| Polymer 6 | is a polyethylene glycol polymer grafted with vinyl acetate side chains, provided by BASF. |
| Protease | is Purafect Prime®, 40.6 mg active/g, supplied by DuPont |
| Structurant | is Hydrogenated Castor Oil |

## Claims

1. A laundry care composition comprising: (a) at least one laundry care ingredient and (b) at least one leuco polymer comprising a leuco monomer and an alkene, wherein the leuco polymer has a molecular weight of at least 500 and is obtainable by polymerization of the leuco monomer and one or more alkene co-monomers, wherein the leuco monomer consists of an alkene covalently bound to a leuco moiety and the leuco monomer has a maximum molar extinction coefficient at a wavelength in the range 400 to 750nm of less than 1000 $M^{-1}cm^{-1}$, wherein the alkene co-monomer(s) have a maximum molar extinction coefficient at a wavelength in the range 400 to 750nm that is less than 100 $M^{-1}cm^{-1}$.

2. A laundry care composition according to claim 1, wherein the leuco monomer is of the form:

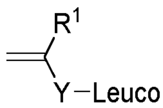

wherein Y is an organic bridging group covalently connecting a leuco moiety to the alkene moiety of the leuco monomer and $R^1$ is selected from the group consisting H, unsubstituted or substituted alkyl, unsubstituted or substituted aryl, benzyl, halogen, ester, acid amide, and cyano.

**3.** A laundry care composition according to claim 2, wherein the organic bridging group is selected from: $-CON(R^4)-$, $-CO_2-$, $-N(R^4)-$, -O-, -S-, $-SO_2-$, $-SO_2N(R^4)-$, $-N(COR^4)-$, and - $N(SO_2R^4)-$; wherein $R^4$ is selected from the group consisting of H, phenyl, benzyl and unsubstituted or substituted $C_1$ -$C_6$ branched or linear alkyl wherein the substituent of said linear or branched alkyl is located between two carbons of said alkyl and is selected from the group consisting of-O-, -S-, $-SO_2-$, $-CO_2-$, and an amine.

**4.** A laundry care composition according to claim 3, wherein the organic bridging group is - $CON(R^4)-$.

**5.** A laundry care composition according to any of claims 2 to 4, wherein the Y group is bound directly to a carbon atom of an aromatic ring of the leuco moiety.

**6.** A laundry care composition according to any of claims 2 to 5, wherein $R^1$ is selected from H and methyl.

**7.** A laundry care composition according to any preceding claim, wherein the leuco monomer is selected from the group consisting of:

(i) a leuco moiety wherein one $-NR^4H$ of the leuco moiety is converted to $-NR^4-C(O)-CH=CH_2$ or $-NR^4-C(O)-C(Me)=CH_2$, wherein $R^4$ is as defined above; or
(ii) a leuco moiety wherein one -OH of the leuco moiety is converted to $-O-C(O)-CH=CH_2$ or $-O-C(O)-C(Me)=CH_2$.

**8.** A laundry care composition according to any preceding claim, wherein the leuco monomer is:

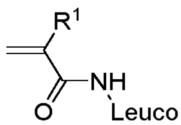

wherein the leuco moiety carries at least one sulphonate.

**9.** A laundry care composition according to any preceding claim, wherein the leuco monomer is:

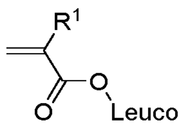

wherein the leuco moiety carries at least one sulphonate.

**10.** A laundry care composition according to any preceding claim, wherein the co-monomer is selected from:

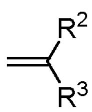 and 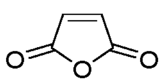,

wherein $R^2$ and $R^3$ are independently selected from H, $C_1$-$C_8$ branched, cyclic and linear alkyl chains, C(O)OH, $CO_2C_{1-18}$ branched and linear alkyl chains, $-C(O)N(C_{1-18})_2$, - $C(O)N(C_{1-18})H$, $-C(O)NH_2$, and heteroaromatic, phenyl, benzyl, polyether, cyano, Cl and F.

**11.** The laundry care composition according to any preceding claim, wherein the leuco moiety is a univalent or polyvalent moiety derived by removal of one or more hydrogen atoms from a structure of Formula (I), (II), (III), (IV), or (V):

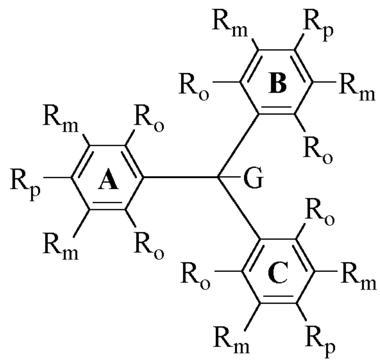 ; (I)

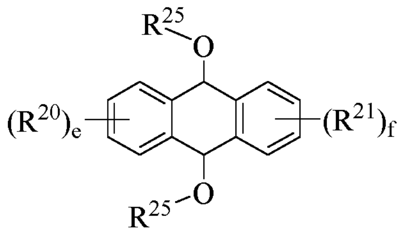 ; (II)

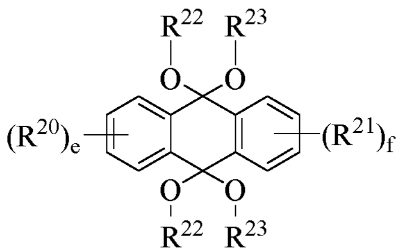 ; (III)

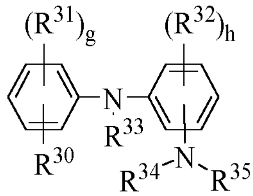 ; and (IV)

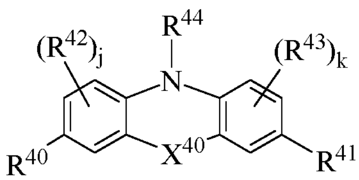 ; (V)

wherein the ratio of Formula I-V to its oxidized form is at least 1:19; wherein each individual $R_o$, $R_m$ and $R_p$ group on each of rings A, B and C is independently selected from the group consisting of hydrogen, deuterium and $R^5$; wherein each $R^5$ is independently selected from the group consisting of halogens, nitro, alkyl, substituted alkyl, aryl, substituted aryl, alkaryl, substituted alkaryl, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$ , and $-P(O)(O^-)_2$; ; wherein at least one of the $R_o$ and $R_m$ groups on at least one of the three rings A, B or C is hydrogen; each $R_p$

is independently selected from hydrogen, $-OR^1$ and $-NR^1R^2$;
wherein G is independently selected from the group consisting of hydrogen, deuterium, $C_1$-$C_{16}$ alkoxide, phenoxide, bisphenoxide, nitrite, nitrile, alkyl amine, imidazole, arylamine, polyalkylene oxide, halides, alkylsulfide, aryl sulfide, and phosphine oxide;
wherein $R^1$, $R^2$ and $R^3$ are independently selected from the group consisting of hydrogen, alkyl, substituted alkyl, aryl, substituted aryl, alkaryl, substituted alkaryl, and $R^4$; $R^4$ is a organic group composed of one or more organic monomers with said monomer molecular weights ranging from 28 to 500;
wherein e and f are independently integers from 0 to 4;
wherein each $R^{20}$ and $R^{21}$ is independently selected from the group consisting of a halogen, a nitro group, alkyl groups, substituted alkyl groups, $-NC(O)OR^1$, $-NC(O)SR^1$, $-OR^1$, and $-NR^1R^2$;
wherein each $R^{25}$ is independently selected from the group consisting of a monosaccharide moiety, a disaccharide moiety, an oligosaccharide moiety, a polysaccharide moiety, $-C(O)R^1$, $-C(O)OR^1$, $-C(O)NR^1R^2$;
wherein each $R^{22}$ and $R^{23}$ is independently selected from the group consisting of hydrogen, an alkyl group, and substituted alkyl groups;
wherein $R^{30}$ is positioned ortho or para to the bridging amine moiety and is selected from the group consisting of $-OR^{38}$ and $-NR^{36}R^{37}$, wherein each $R^{36}$ and $R^{37}$ is independently selected from the group consisting of hydrogen, an alkyl group, a substituted alkyl group, an aryl group, a substituted aryl group, an acyl group, $R^4$, $-C(O)OR^1$, $-C(O)R^1$, and $-C(O)NR^1R^2$;
wherein $R^{38}$ is selected from the group consisting of hydrogen, an acyl group, $-C(O)OR^1$, $-C(O)R^1$, and $-C(O)NR^1R^2$;
wherein g and h are independently integers from 0 to 4;
wherein each $R^{31}$ and $R^{32}$ is independently selected from the group consisting of an alkyl group, a substituted alkyl group, an aryl group, a substituted aryl group, an alkaryl, substituted alkaryl, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$, and $-P(O)(O^-)_2$ ;
wherein $-NR^{34}R^{35}$ is positioned ortho or para to the bridging amine moiety and $R^{34}$ and $R^{35}$ are independently selected from the group consisting of hydrogen, an alkyl, a substituted alkyl, an aryl, a substituted aryl, an alkaryl, a substituted alkaryl, and $R^4$;
wherein $R^{33}$ is independently selected from the group consisting of hydrogen, $-S(O)_2R^1$, $-C(O)N(H)R^1$; $-C(O)OR^1$; and $-C(O)R^1$; wherein when g is 2 to 4, any two adjacent $R^{31}$ groups may combine to form a fused ring of five or more members wherein no more than two of the atoms in the fused ring may be nitrogen atoms;
wherein $X^{40}$ is selected from the group consisting of an oxygen atom, a sulfur atom, and $NR^{45}$; wherein $R^{45}$ is independently selected from the group consisting of hydrogen, deuterium, an alkyl, a substituted alkyl, an aryl, a substituted aryl, an alkaryl, a substituted alkaryl, $-S(O)_2OH$, $-S(O)_2O$-, $-C(O)OR^1$, $-C(O)R^1$, and $-C(O)NR^1R^2$;
wherein $R^{40}$ and $R^{41}$ are independently selected from the group consisting of $-OR^1$ and $-NR^1R^2$;
wherein j and k are independently integers from 0 to 3;
wherein $R^{42}$ and $R^{43}$ are independently selected from the group consisting of an alkyl, a substituted alkyl, an aryl, a substituted aryl, an alkaryl, a substituted alkaryl, $-S(O)_2R^1$, $-C(O)NR^1R^2$, $-NC(O)OR^1$, $-NC(O)SR^1$, $-C(O)OR^1$, $-C(O)R^1$, $-OR^1$, $-NR^1R^2$;
wherein $R^{44}$ is $-C(O)R^1$, $-C(O)NR^1R^2$, and $-C(O)OR^1$;
wherein any charge present in any of the compounds is balanced with a suitable independently selected internal or external counterion.

**12.** A laundry care composition according to claim 11, wherein all of the $R_o$ and $R_m$ groups on all three rings A, B or C are hydrogen.

**13.** A laundry care composition according to claim 11 or claim 12, wherein all three $R_p$ are $-NR^1R^2$.

**14.** A laundry care composition according to any preceding claim:
wherein the laundry care ingredient is selected from the group consisting of surfactants, builders, chelating agents, dye transfer inhibiting agents, dispersants, enzymes, enzyme stabilizers, catalytic materials, bleach activators, polymeric dispersing agents, clay soil removal agents, anti-redeposition agents, brighteners, suds suppressors, dyes, perfume, perfume delivery systems, structurants, fabric softeners, carriers, hydrotropes, processing aids, pigments, antioxidants and mixtures thereof.

**15.** A method of treating a textile, the method comprising the steps of:

(i) treating a textile with an aqueous solution of the laundry care composition as defined in any preceding claim, the aqueous solution comprising from 100 ppb to 5000 ppm, of the leuco polymer; and, from 0.0 g/L to 3 g/L of a surfactant;
(ii) optionally rinsing; and
(iii) drying the textile.

**Patentansprüche**

1. Wäschepflegezusammensetzung, umfassend: (a) mindestens einen Wäschepflegebestandteil und (b) mindestens ein Leukopolymer, umfassend ein Leukomonomer und ein Alken, wobei das Leukopolymer ein Molekulargewicht von mindestens 500 aufweist und durch Polymerisation des Leukomonomers und eines oder mehrerer Alken-Comonomere erhältlich ist, wobei das Leukomonomer aus einem Alken besteht, das kovalent an einen Leukomolekülteil gebunden ist und das Leukomonomer einen maximalen molaren Extinktionskoeffizienten bei einer Wellenlänge im Bereich von 400 bis 750 nm von weniger als 1000 $M^{-1}$ $cm^{-1}$ aufweist, wobei das/die Alken-Comonomer(e) einen maximalen molaren Extinktionskoeffizienten bei einer Wellenlänge im Bereich von 400 bis 750 nm aufweist/aufweisen, der weniger als 100 $M^{-1}$ $cm^{-1}$ beträgt.

2. Wäschepflegezusammensetzung nach Anspruch 1, wobei das Leukomonomer von der folgenden Form ist:

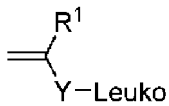

worin Y eine organische Überbrückungsgruppe ist, die einen Leukomolekülteil kovalent mit dem Alkenmolekülteil des Leukomonomers verbindet und $R^1$ ausgewählt ist aus der Gruppe, bestehend aus H, unsubstituiertem oder substituiertem Alkyl, unsubstituiertem oder substituiertem Aryl, Benzyl, Halogen, Ester, Säureamid und Cyano.

3. Wäschepflegezusammensetzung nach Anspruch 2, wobei die organische Überbrückungsgruppe ausgewählt ist aus: $-CON(R^4)-$, $-CO_2-$, $-N(R^4)-$, -O-, -S-, $-SO_2-$, $-SO_2N(R^4)-$, $-N(COR^4)-$ und $-N(SO_2R^4)-$; worin $R^4$ ausgewählt ist aus der Gruppe, bestehend aus H, Phenyl, Benzyl und unsubstituiertem oder substituiertem, verzweigtem oder linearem $C_1$-$C_6$-Alkyl, wobei der Substituent des linearen oder verzweigten Alkyls sich zwischen zwei Kohlenstoffen des Alkyls befindet und ausgewählt ist aus der Gruppe, bestehend aus -O-, -S-, $-SO_2-$, $-CO_2-$ und einem Amin.

4. Wäschepflegezusammensetzung nach Anspruch 3, wobei die organische Überbrückungsgruppe $-CON(R^4)-$ ist.

5. Wäschepflegezusammensetzung nach einem der Ansprüche 2 bis 4, wobei die Y-Gruppe direkt an ein Kohlenstoffatom eines aromatischen Rings des Leukomolekülteils gebunden ist.

6. Wäschepflegezusammensetzung nach einem der Ansprüche 2 bis 5, wobei $R^1$ ausgewählt ist aus H und Methyl.

7. Wäschepflegezusammensetzung nach einem der vorstehenden Ansprüche, wobei das Leukomonomer ausgewählt ist aus der Gruppe, bestehend aus:

(i) einem Leukomolekülteil, wobei ein $-NR^4H$ des Leukomolekülteils zu $-NR^4-C(O)-CH=CH_2$ oder $-NR^4-C(O)-C(Me)=CH_2$ umgewandelt wird, worin $R^4$ wie vorstehend definiert ist; oder
(ii) einem Leukomolekülteil, wobei ein -OH des Leukomolekülteils zu $-O-C(O)-CH=CH_2$ oder $-O-C(O)-C(Me)=CH_2$ umgewandelt wird.

8. Wäschepflegezusammensetzung nach einem der vorstehenden Ansprüche, wobei das Leukomonomer Folgendes ist:

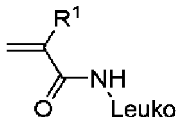

wobei der Leukomolekülteil mindestens ein Sulfonat trägt.

**9.** Wäschepflegezusammensetzung nach einem der vorstehenden Ansprüche, wobei das Leukomonomer Folgendes ist:

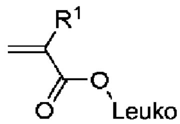

wobei der Leukomolekülteil mindestens ein Sulfonat trägt.

**10.** Wäschepflegezusammensetzung nach einem der vorstehenden Ansprüche, wobei das Comonomer ausgewählt ist aus:

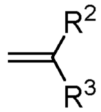 und 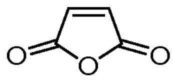,

worin $R^2$ und $R^3$ unabhängig ausgewählt sind aus H, verzweigten, cyclischen und linearen $C_1$-$C_8$-Alkylketten, C(O)OH, verzweigten und linearen $CO_2C_{1-18}$-Alkylketten, $-C(O)N(C_{1-18})_2$, $-C(O)N(C_{1-18})H$, $-C(O)NH_2$ und Heteroaromat, Phenyl, Benzyl, Polyether, Cyano, Cl und F.

**11.** Wäschepflegezusammensetzung nach einem der vorstehenden Ansprüche, wobei der Leukomolekülteil ein einwertiger oder mehrwertiger Molekülteil ist, der durch Entfernen eines oder mehrerer Wasserstoffatome aus einer Struktur der Formel (I), (II), (III), (IV) oder (V) abgeleitet ist:

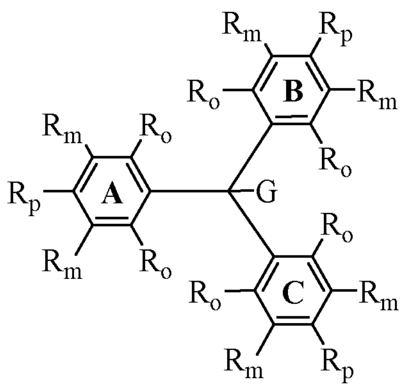 ; (I)

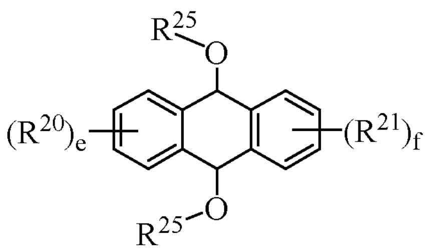 ; (II)

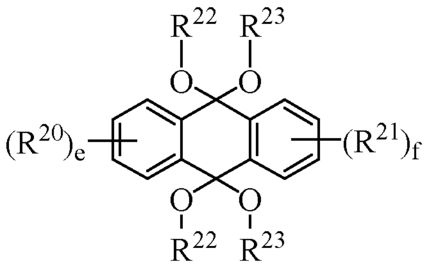

; (III)

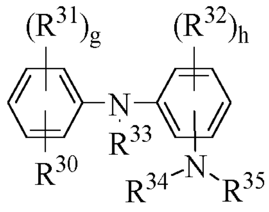

; und (IV)

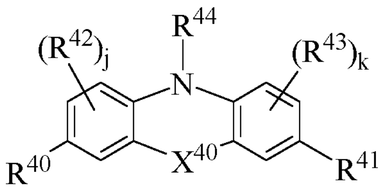

; (V)

wobei das Verhältnis der Formeln I-V zu ihrer oxidierten Form mindestens 1 : 19 beträgt; worin jede einzelne $R_o$-, $R_m$- und $R_p$-Gruppe an jedem der Ringe A, B und C unabhängig ausgewählt ist aus der Gruppe, bestehend aus Wasserstoff, Deuterium und $R^5$; worin jeder $R^5$ unabhängig ausgewählt ist aus der Gruppe, bestehend aus Halogenen, Nitro, Alkyl, substituiertem Alkyl, Aryl, substituiertem Aryl, Alkaryl, substituiertem Alkaryl, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$ und $-P(O)(O^-)_2$;; worin mindestens eine der $R_o$- und $R_m$-Gruppen an mindestens einem der drei Ringe A, B oder C Wasserstoff ist; jeder $R_p$ unabhängig ausgewählt ist aus Wasserstoff, $-OR^1$ und $-NR^1R^2$;

worin G unabhängig ausgewählt ist aus der Gruppe, bestehend aus Wasserstoff, Deuterium, $C_1$-$C_{16}$-Alkoxid, Phenoxid, Bisphenoxid, Nitrit, Nitril, Alkylamin, Imidazol, Arylamin, Polyalkylenoxid, Halogeniden, Alkylsulfid, Arylsulfid und Phosphinoxid;

worin $R^1$, $R^2$ und $R^3$ unabhängig ausgewählt sind aus der Gruppe, bestehend aus Wasserstoff, Alkyl, substituiertem Alkyl, Aryl, substituiertem Aryl, Alkaryl, substituiertem Alkaryl und $R^4$; $R^4$ eine organische Gruppe ist, zusammengesetzt aus einem oder mehreren organischen Monomeren mit den Monomer-Molekulargewichten im Bereich von 28 bis 500;

worin e und f unabhängige ganze Zahlen von 0 bis 4 sind;

worin jeder $R^{20}$ und $R^{21}$ unabhängig ausgewählt ist aus der Gruppe, bestehend aus einem Halogen, einer Nitrogruppe, Alkylgruppen, substituierten Alkylgruppen, $-NC(O)OR^1$, $-NC(O)SR^1$, $-OR^1$ und $-NR^1R^2$;

worin jeder $R^{25}$ unabhängig ausgewählt ist aus der Gruppe, bestehend aus einem Monosaccharidmolekülteil, einem Disaccharidmolekülteil, einem Oligosaccharidmolekülteil, einem Polysaccharidmolekülteil, $-C(O)R^1$, $-C(O)OR^1$, $-C(O)NR^1R^2$;

worin jeder $R^{22}$ und $R^{23}$ unabhängig ausgewählt ist aus der Gruppe, bestehend aus Wasserstoff, einer Alkylgruppe und substituierten Alkylgruppen;

worin $R^{30}$ ortho oder para zum Überbrückungsaminmolekülteil positioniert ist und ausgewählt ist aus der Gruppe, bestehend aus $-OR^{38}$ und $-NR^{36}R^{37}$, wobei jeder $R^{36}$ und $R^{37}$ unabhängig ausgewählt ist aus der Gruppe, bestehend aus Wasserstoff, einer Alkylgruppe, einer substituierten Alkylgruppe, einer Arylgruppe, einer substituierten Arylgruppe, einer Acylgruppe, $R^4$, $-C(O)OR^1$, $-C(O)R^1$ und $-C(O)NR^1R^2$;

worin $R^{38}$ ausgewählt ist aus der Gruppe, bestehend aus Wasserstoff, einer Acylgruppe, $-C(O)OR^1$, $-C(O)R^1$ und $-C(O)NR^1R^2$;

worin g und h unabhängig ganze Zahlen von 0 bis 4 sind;

worin jeder $R^{31}$ und $R^{32}$ unabhängig ausgewählt ist aus der Gruppe, bestehend aus einer Alkylgruppe, einer

substituierten Alkylgruppe, einer Arylgruppe, einer substituierten Arylgruppe, einem Alkaryl, substituierten Alkaryl, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$ und $-P(O)(O^-)_2$;
worin $-NR^{34}R^{35}$ ortho oder para zu dem Überbrückungsaminmolekülteil positioniert ist und $R^{34}$ und $R^{35}$ unabhängig ausgewählt sind aus der Gruppe, bestehend aus Wasserstoff, einem Alkyl, einem substituierten Alkyl, einem Aryl, einem substituierten Aryl, einem Alkaryl, einem substituierten Alkaryl und $R^4$;
worin $R^{33}$ unabhängig ausgewählt ist aus der Gruppe, bestehend aus Wasserstoff, $-S(O)_2R^1$, $-C(O)N(H)R^1$; $-C(O)OR^1$; und $-C(O)R^1$; wobei, wenn g 2 bis 4 ist, sich zwei beliebige benachbarte $R^{31}$-Gruppen vereinen können, um einen kondensierten Ring aus fünf oder mehr Gliedern zu bilden, wobei nicht mehr als zwei der Atome in dem kondensierten Ring Stickstoffatome sein dürfen;
worin $X^{40}$ ausgewählt ist aus der Gruppe, bestehend aus einem Sauerstoffatom, einem Schwefelatom und $NR^{45}$; worin $R^{45}$ unabhängig ausgewählt ist aus der Gruppe, bestehend aus Wasserstoff, Deuterium, einem Alkyl, einem substituierten Alkyl, einem Aryl, einem substituierten Aryl, einem Alkaryl, einem substituierten Alkaryl, $-S(O)_2OH$, $-S(O)_2O^-$, $-C(O)OR^1$, $-C(O)R^1$ und $-C(O)NR^1R^2$;
worin $R^{40}$ und $R^{41}$ unabhängig ausgewählt sind aus der Gruppe, bestehend aus $-OR^1$ und $-NR^1R^2$;
worin j und k unabhängig ganze Zahlen von 0 bis 3 sind;
worin $R^{42}$ und $R^{43}$ unabhängig ausgewählt sind aus der Gruppe, bestehend aus einem Alkyl, einem substituierten Alkyl, einem Aryl, einem substituierten Aryl, einem Alkaryl, einem substituierten Alkaryl, $-S(O)_2R^1$, $-C(O)NR^1R^2$, $-NC(O)OR^1$, $-NC(O)SR^1$, $-C(O)OR^1$, $-C(O)R^1$, $-OR^1$, $-NR^1R^2$;
worin $R^{44}$ $-C(O)R^1$, $-C(O)NR^1R^2$ und $-C(O)OR^1$ ist;
wobei jegliche in beliebiger der Verbindungen vorhandene Ladung mit einem geeigneten unabhängig ausgewählten internen oder externen Gegenion ausgeglichen ist.

**12.** Wäschepflegezusammensetzung nach Anspruch 11, wobei alle der $R_o$- und $R_m$-Gruppen an allen drei Ringen A, B oder C Wasserstoff sind.

**13.** Wäschepflegezusammensetzung nach Anspruch 11 oder Anspruch 12, wobei alle drei $R_p$ $-NR^1R^2$ sind.

**14.** Wäschepflegezusammensetzung nach einem der vorstehenden Ansprüche:
wobei der Wäschepflegebestandteil ausgewählt ist aus der Gruppe, bestehend aus Tensiden, Gerüststoffen, Chelatbildnern, Farbstoffübertragungshemmern, Dispergiermitteln, Enzymen, Enzymstabilisatoren, katalytischen Materialien, Bleichmittelaktivatoren, polymeren Dispergiermitteln, Lehmschmutzentfernungsmitteln, Antiwiederablagerungsmitteln, Aufhellern, Schaumunterdrückern, Farbstoffen, Duftstoff, Duftstoffabgabesystemen, Strukturmitteln, Gewebeweichmachern, Trägern, Hydrotropika, Verarbeitungshilfsmitteln, Pigmenten, Antioxidationsmitteln und Mischungen davon.

**15.** Verfahren zum Behandeln einer Textilie, wobei das Verfahren die folgenden Schritte umfasst:

(i) Behandeln einer Textilie mit einer wässrigen Lösung der Wäschepflegezusammensetzung, wie nach einem der vorstehenden Ansprüche definiert, wobei die wässrige Lösung 100 ppb bis 5000 ppm des Leukopolymers umfasst; und 0,0 g/l bis 3 g/l ein Tensid;
(ii) wahlweise Spülen; und
(iii) Trocknen der Textilie.

## Revendications

**1.** Composition de lessive comprenant : (a) au moins un ingrédient de lessive et (b) au moins un leuco-polymère comprenant un leuco-monomère et un alcène, dans laquelle le leuco-polymère a une masse moléculaire d'au moins 500 et peut être obtenu par polymérisation du leuco-monomère et d'un ou plusieurs co-monomères alcène, dans laquelle le leuco-monomère est constitué d'un alcène lié par covalence à un fragment leuco et le leuco-monomère a un coefficient d'extinction molaire maximal à une longueur d'onde dans la plage de 400 à 750 nm inférieur à 1000 $M^{-1}$ $cm^{-1}$, dans laquelle le(s) co-monomère(s) alcène ont un coefficient d'extinction molaire maximal à une longueur d'onde dans la plage de 400 à 750 nm qui est inférieur à 100 $M^{-1}$ $cm^{-1}$.

**2.** Composition de lessive selon la revendication 1, dans laquelle le leuco-monomère est de la forme :

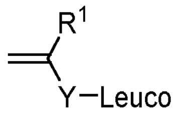

dans laquelle Y est un groupe de pontage organique reliant par covalence un fragment leuco au fragment alcène du leuco-monomère et $R^1$ est choisi parmi le groupe constitué de H, alkyle non substitué ou substitué, aryle non substitué ou substitué, benzyle, halogène, ester, amide d'acide, et cyano.

**3.** Composition de lessive selon la revendication 2, dans laquelle le groupe de pontage organique est choisi parmi : $-CON(R^4)-$, $-CO_2-$, $-N(R^4)-$, -O-, -S-,$-SO_2-$, $-SO_2N(R^4)-$, $-N(COR^4)-$, et $-N(SO_2R^4)-$ ; dans laquelle $R^4$ est choisi dans le groupe constitué de H, phényle, benzyle et alkyle ramifié ou linéaire en $C_1$ à $C_6$ non substitué ou substitué dans laquelle le substituant dudit alkyle linéaire ou ramifié se situe entre deux carbones dudit alkyle et est choisi dans le groupe constitué de -O-, -S-, $-SO_2-$, $-CO_2-$, et une amine.

**4.** Composition de lessive selon la revendication 3, dans laquelle le groupe de pontage organique est $-CON(R^4)-$.

**5.** Composition de lessive selon l'une quelconque des revendications 2 à 4, dans laquelle le groupe Y est lié directement à un atome de carbone d'un noyau aromatique du fragment leuco.

**6.** Composition de lessive selon l'une quelconque des revendications 2 à 5, dans laquelle $R^1$ est choisi parmi H et méthyle.

**7.** Composition de lessive selon une quelconque revendication précédente, dans laquelle le leuco-monomère est choisi dans le groupe constitué de :

(i) un fragment leuco dans laquelle un $-NR^4H$ du fragment leuco est converti en $-NR^4-C(O)-C\ H=CH_2$ ou $-NR^4-C(O)-C(Me)=CH_2$, dans laquelle $R^4$ est tel que défini précédemment ; ou
(ii) un fragment leuco dans laquelle un -OH du fragment leuco est converti en $-O-C(O)-CH=CH_2$ ou $-O-C(O)-C(Me)=CH_2$.

**8.** Composition de lessive selon une quelconque revendication précédente, dans laquelle le leuco-monomère est :

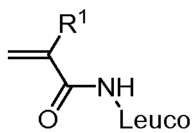

dans laquelle le fragment leuco porte au moins un sulfonate.

**9.** Composition de lessive selon une quelconque revendication précédente, dans laquelle le leuco-monomère est :

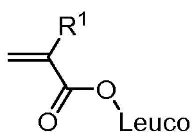

dans laquelle le fragment leuco porte au moins un sulfonate.

**10.** Composition de lessive selon une quelconque revendication précédente, dans laquelle le co-monomère est choisi parmi :

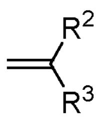 et 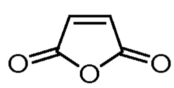,

dans laquelle $R^2$ et $R^3$ sont indépendamment choisis parmi H, chaînes alkyle ramifiées, cycliques et linéaire en $C_1$ à Cs, C(O)OH, $CO_2$(chaînes alkyle ramifiées et linéaires en $C_{1\ à\ 18}$), $-C(O)N(C_{1\ à\ 18})_2$, $-C(O)N(C_{1\ à\ 18})H$, $-C(O)NH_2$, et composé hétéroaromatique, phényle, benzyle, polyéther, cyano, Cl et F.

**11.** Composition de lessive selon une quelconque revendication précédente, dans laquelle le fragment leuco est un fragment monovalent ou polyvalent dérivé par le retrait d'un ou plusieurs atomes d'hydrogène d'une structure de Formule (I), (II), (III), (IV), ou (V) :

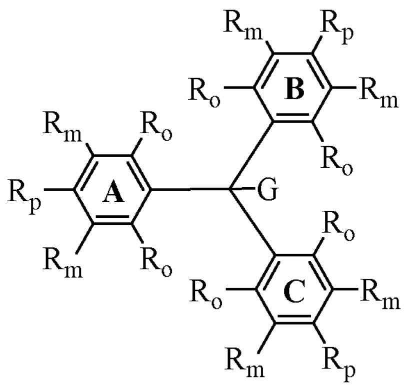

; (I)

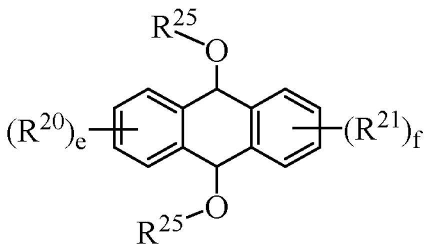

; (II)

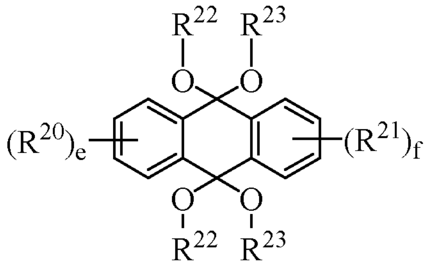

; (III)

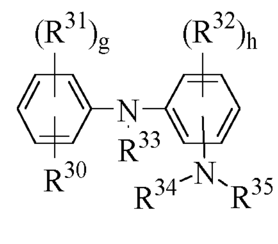

; et (IV)

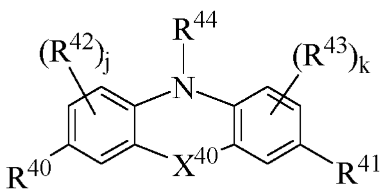

; (V)

dans laquelle le rapport de la Formule I à V à sa forme oxydée vaut au moins 1:19 ; dans laquelle chaque groupe individuel $R_o$, $R_m$ et $R_p$ sur chacun des cycles A, B et C est indépendamment choisi dans le groupe constitué d'hydrogène, deutérium et $R^5$ ; dans laquelle chaque $R^5$ est indépendamment choisi dans le groupe constitué d'halogènes, nitro, alkyle, alkyle substitué, aryle, aryle substitué, alkaryle, alkaryle substitué, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$, et $-P(O)(O^-)_2$ ; ; dans laquelle au moins l'un des groupes $R_o$ et $R_m$ sur au moins l'un des trois cycles A, B ou C est un hydrogène ; chaque $R_p$ est indépendamment choisi parmi hydrogène, $-OR^1$ et $-NR^1R^2$ ;

dans laquelle G est indépendamment choisi dans le groupe constitué d'hydrogène, deutérium, alcoolate en $C_1$ à $C_{16}$, phénolate, bisphénolate, nitrite, nitrile, alkylamine, imidazole, arylamine, poly(oxyde d'alkylène), halogénures, sulfure d'alkyle, sulfure d'aryle, et oxyde de phosphine ;

dans laquelle $R^1$, $R^2$ et $R^3$ sont indépendamment choisis dans le groupe constitué d'hydrogène, alkyle, alkyle substitué, aryle, aryle substitué, alkaryle, alkaryle substitué, et $R^4$ ; $R^4$ est un groupe organique composé d'un ou plusieurs monomères organiques avec les masses moléculaires desdits monomères allant de 28 à 500 ;

dans laquelle e et f sont indépendamment des nombres entiers allant de 0 à 4 ;

dans laquelle chacun de $R^{20}$ et $R^{21}$ est indépendamment choisi dans le groupe constitué d'un halogène, un groupe nitro, des groupes alkyle, des groupes alkyle substitué, $-NC(O)OR^1$, $-NC(O)SR^1$, $-OR^1$, et $-NR^1R^2$ ;

dans laquelle chaque $R^{25}$ est indépendamment choisi dans le groupe constitué d'un fragment monosaccharide, un fragment disaccharide, un fragment oligosaccharide, un fragment polysaccharide, $-C(O)R^1$, $-C(O)OR^1$, $-C(O)NR^1R^2$ ;

dans laquelle chacun de $R^{22}$ et $R^{23}$ est indépendamment choisi dans le groupe constitué d'hydrogène, un groupe alkyle, et des groupes alkyle substitué ;

dans laquelle $R^{30}$ est positionné en ortho ou para par rapport au fragment amine de pontage et est choisi dans le groupe constitué de $-OR^{38}$ et $-NR^{36}R^{37}$, dans laquelle chacun de $R^{36}$ et $R^{37}$ est indépendamment choisi dans le groupe constitué d'hydrogène, un groupe alkyle, un groupe alkyle substitué, un groupe aryle, un groupe aryle substitué, un groupe acyle, $R^4$, $-C(O)OR^1$, $-C(O)R^1$, et $-C(O)NR^1R^2$ ;

dans laquelle $R^{38}$ est choisi dans le groupe constitué d'hydrogène, un groupe acyle, $-C(O)OR^1$, $-C(O)R^1$, et $-C(O)NR^1R^2$ ;

dans laquelle g et h sont indépendamment des nombres entiers allant de 0 à 4 ;

dans laquelle chacun de $R^{31}$ et $R^{32}$ est indépendamment choisi dans le groupe constitué d'un groupe alkyle, un groupe alkyle substitué, un groupe aryle, un groupe aryle substitué, un alkaryle, un alkaryle substitué, $-C(O)R^1$, $-C(O)OR^1$, $-C(O)O^-$, $-C(O)NR^1R^2$, $-OC(O)R^1$, $-OC(O)OR^1$, $-OC(O)NR^1R^2$, $-S(O)_2R^1$, $-S(O)_2OR^1$, $-S(O)_2O^-$, $-S(O)_2NR^1R^2$, $-NR^1C(O)R^2$, $-NR^1C(O)OR^2$, $-NR^1C(O)SR^2$, $-NR^1C(O)NR^2R^3$, $-OR^1$, $-NR^1R^2$, $-P(O)_2R^1$, $-P(O)(OR^1)_2$, $-P(O)(OR^1)O^-$, et $-P(O)(O^-)_2$ ;

dans laquelle $-NR^{34}R^{35}$ est positionné en ortho ou para par rapport au fragment amine de pontage et $R^{34}$ et $R^{35}$ sont indépendamment choisis dans le groupe constitué d'hydrogène, un alkyle, un alkyle substitué, un aryle, un aryle substitué, un alkaryle, un alkaryle substitué, et $R^4$ ;

dans laquelle $R^{33}$ est indépendamment choisi dans le groupe constitué d'hydrogène, $-S(O)_2R^1$, $-C(O)N(H)R^1$ ; $-C(O)OR^1$ ; et $-C(O)R^1$ ; dans laquelle lorsque g va de 2 à 4, deux groupes $R^{31}$ adjacents quelconques peuvent se combiner pour former un cycle condensé de cinq chaînons ou plus dans laquelle pas plus de deux des atomes dans le cycle condensé peuvent être des atomes d'azote ;

dans laquelle $X^{40}$ est choisi dans le groupe constitué d'un atome d'oxygène, un atome de soufre, et $NR^{45}$ ;

dans laquelle $R^{45}$ est indépendamment choisi dans le groupe constitué d'hydrogène, deutérium, un alkyle, un alkyle substitué, un aryle, un aryle substitué, un alkaryle, un alkaryle substitué, $-S(O)_2OH$, $-S(O)_2O^-$, $-C(O)OR^1$, $-C(O)R^1$, et $-C(O)NR^1R^2$ ;

dans laquelle $R^{40}$ et $R^{41}$ sont indépendamment choisis dans le groupe constitué de $-OR^1$ et $-NR^1R^2$ ;

dans laquelle j et k sont indépendamment des nombres entiers allant de 0 à 3 ;

dans laquelle $R^{42}$ et $R^{43}$ sont indépendamment choisis dans le groupe constitué d'un alkyle, un alkyle substitué, un aryle, un aryle substitué, un alkaryle, un alkaryle substitué, $-S(O)_2R^1$, $-C(O)NR^1R^2$, $-NC(O)OR^1$, $-NC(O)SR^1$, $-C(O)OR^1$, $-C(O)R^1$, $-OR^1$, $-NR^1R^2$ ;

dans laquelle $R^{44}$ est $-C(O)R^1$, $-C(O)NR^1R^2$, et $-C(O)OR^1$ ;

dans laquelle n'importe quelle charge présente dans n'importe lequel des composés est équilibrée avec un contre-ion interne ou externe approprié indépendamment choisi.

**12.** Composition de lessive selon la revendication 11, dans laquelle tous parmi les groupes $R_o$ et $R_m$ sur tous les trois cycles A, B ou C sont hydrogène.

**13.** Composition de lessive selon la revendication 11 ou la revendication 12, dans laquelle tous les trois $R_p$ sont $-NR^1R^2$.

**14.** Composition de lessive selon une quelconque revendication précédente :
dans laquelle l'ingrédient de lessive est choisi dans le groupe constitué d'agents tensioactifs, adjuvants, agents chélatants, agents inhibant la décoloration, dispersants, enzymes, agents stabilisant les enzymes, matériaux catalytiques, activateurs de blanchiment, agents de dispersion polymères, agents d'élimination des salissures d'argile, agents antiredépositions, azurants, suppresseurs de mousse, colorants, parfum, systèmes de libération de parfum, structurants, adoucissants des tissus, véhicules, hydrotropes, auxiliaires de traitement, pigments, antioxydants et des mélanges de ceux-ci.

**15.** Procédé de traitement d'un textile, le procédé comprenant les étapes consistant à :

(i) traiter un textile avec une solution aqueuse de la composition de lessive telle que définie dans l'une quelconque revendication précédente, la solution aqueuse comprenant de 100 parties par milliard à 5000 ppm, du leucopolymère ; et, de 0,0 g/L à 3 g/L d'un agent tensioactif ;
(ii) éventuellement rincer ; et
(iii) sécher le textile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008100445 A
- WO 9905243 A
- WO 9905242 A
- WO 9905244 A
- WO 9905082 A
- WO 9905084 A
- WO 9905241 A
- WO 9907656 A
- WO 0023549 A
- WO 0023548 A
- US 3929678 A
- US 6136769 A
- US 6004922 A
- WO 9835002 A
- WO 9835003 A
- WO 9835004 A
- WO 9835005 A
- WO 9835006 A
- US 4228042 A
- US 4239660 A
- US 4260529 A
- US 6022844 A
- US 6221825 B
- WO 0047708 A
- US 4222905 A, Cockrell
- US 4239659 A, Murphy
- WO 2016041676 A
- WO 9108281 A
- US 9365806 B
- US 7000000 B
- US 20130244288 A
- US 2013 A
- US 3962418 A
- US 3958581 A
- US 20070207109 A1
- US 6710023 B
- US 9752101 B
- US 9487739 B
- US 9631163 B
- WO 2012004134 A
- WO 9307263 A
- WO 9307260 A
- WO 8908694 A
- US 3553139 A
- US 4101457 A
- US 4507219 A
- US 4261868 A
- US 4537706 A
- US 7445644 B
- US 7585376 B
- US 20090176684 A1
- US 4790856 A
- US 3646015 A
- US 6855680 B
- WO 2010034736 A
- US 4489455 A
- US 4489574 A
- US 2954347 A
- US 4075118 A
- US 4265779 A
- US 3455839 A
- US 3933672 A
- US 4652392 A
- US 4978471 A
- US 4983316 A
- US 5288431 A
- US 4639489 A
- US 4749740 A
- US 4798679 A
- EP 94921505
- US 6020303 A
- US 6060443 A


### Non-patent literature cited in the description


- **M. ZAHRADNIK.** The Production and Application of Fluorescent Brightening Agents. John Wiley & Sons, 1982
- Kirk Othmer Encyclopedia of Chemical Technology. John Wiley & Sons, Inc, 1979, vol. 7, 430-447